# EUROPEAN PATENT SPECIFICATION

(11) **EP 4 258 165 B1**
(45) Date of publication and mention of the grant of the patent: **09.07.2025**
(21) Application number: 21917282.2
(22) Date of filing: 22.12.2021
(51) Int. Cl.: G06V 10/10, G06V 30/224, G06K 19/06

(54) **TWO-DIMENSIONAL CODE DISPLAYING METHOD AND APPARATUS, DEVICE, AND MEDIUM**
VERFAHREN UND VORRICHTUNG ZUR ANZEIGE ZWEIDIMENSIONALER CODES, VORRICHTUNG UND MEDIUM
PROCÉDÉ ET APPAREIL D'AFFICHAGE DE CODE BIDIMENSIONNEL, DISPOSITIF, ET SUPPORT

(30) Priority: 06.01.2021 CN 202110014589
(43) Date of publication of application: 11.10.2023
(73) Proprietor: BEIJING BYTEDANCE NETWORK TECHNOLOGY CO., LTD., Beijing 100041 (CN)
(72) Inventor: XING, Tong, Beijing 100190 (CN); RONG, Sike, Beijing 100190 (CN)
(74) Representative: Dentons UK and Middle East LLP
(86) International application number: PCT/CN2021/140361
(87) International publication number: WO 2022/148242

(56) References cited:
- EP-A1- 3 734 510
- CN-A- 102 243 704
- CN-A- 104 281 865
- CN-A- 105 335 771
- CN-A- 105 335 771
- CN-A- 105 407 071
- CN-A- 107 194 450
- CN-A- 107 194 450
- CN-A- 110 288 069
- CN-A- 112 651 475
- US-A1- 2018 025 263

## Description

### FIELD

The present disclosure relates to the technical field of two-dimensional codes, and in particular to a method and apparatus for displaying a two-dimensional code, a device and a medium.

### BACKGROUND

With the development of Internet technology, two-dimensional codes are more and more widely used in people's lives. For example, people can use two-dimensional codes to share social business cards, short videos, information on social platforms, or the like.

However, the conventional two-dimensional codes have a monotonous style, and the unique style of the application cannot be reflected through the two-dimensional code thereof, and thus the two-dimensional code is less recognizable.

In CN 107194450 A1, a two-dimensional code including variable information is provided. The two-dimensional code comprises a two-dimensional code body, a position detection graphic area and a function graphic area. The position detection graphic area and the function graphic area are attached to the two-dimensional code body. The position detection graphic area is arranged at three corners of the two-dimensional code body, and comprises a positioning block, a partition block and an information box. The positioning block is arranged at the middle part of the partitioning block. The partitioning block and the positioning block are different in color. The partitioning block is arranged in the information box. The edges of the information box are parallel to the edges of the partitioning block.

In CN 105335771 A, a two-dimensional code generating and displaying method is provided. The method includes: receiving a two-dimensional code display instruction and obtaining a characteristic character code based on the two-dimensional code display instruction; according to a preset two-dimensional code display area and a display gray scale, obtaining a display parameter of the characteristic character code; obtaining data information of an original two-dimensional code and generating a target two-dimensional code based on the data information of the original two-dimensional code, the characteristic character code, and the display parameter; and displaying the generated target two-dimensional code.

### SUMMARY

In order to solve or at least partially solve the above technical problems, a method and apparatus for displaying a two-dimensional code, a device and a medium are provided according to the present disclosure.

In a first aspect, a method for displaying a two-dimensional code is provided according to the present disclosure. The method includes:
receiving a two-dimensional code display operation, where the two-dimensional code display operation is used to trigger a display of a two-dimensional code image corresponding to target content, and the target content belongs to a first application; and
displaying, in response to the two-dimensional code display operation, the two-dimensional code image, where the two-dimensional code image includes a first primary positioning point, and a second primary positioning point overlapped with the first primary positioning point; the first primary positioning point is located above the second primary positioning point; the first primary positioning point has a predetermined color; and the second primary positioning point has a signature color of the first application.

In a second aspect, an apparatus for displaying a two-dimensional code is provided according to the present disclosure. The apparatus includes a first receiving unit and a first display unit.

The first receiving unit is configured to receive a two-dimensional code display operation, where the two-dimensional code display operation is used to trigger a display of a two-dimensional code image corresponding to target content, and the target content belongs to a first application.

The first display unit is configured to display, in response to the two-dimensional code display operation, the two-dimensional code image, where the two-dimensional code image includes a first primary positioning point, and a second primary positioning point overlapped with the first primary positioning point; the first primary positioning point is located above the second primary positioning point; the first primary positioning point has a predetermined color; and the second primary positioning point has a signature color of the first application.

In a third aspect, an electric device is provided according to the present disclosure. The electric device includes: a processor; and a memory configured to store executable instructions. The processor is configured to read the executable instructions from the memory, and execute the executable instructions to implement the method for displaying the two-dimensional code according to the first aspect.

In a fourth aspect, a computer-readable storage medium having a computer program stored thereon is provided according to the present disclosure. The computer program, when executed by a processor, causes the processor to implement the method for displaying the two-dimensional code according to the first aspect.

Compared with the conventional technology, the technical solutions according to embodiments of the present disclosure have the following advantages.

With the method and apparatus for displaying the two-dimensional code, the device, and the medium according to the embodiments of the present disclosure, the two-dimensional code image corresponding to the target content in the first application can be displayed in response to the two-dimensional code display operation. The two-dimensional code image may include the first primary positioning point, and the second primary positioning point overlapped with the first primary positioning point. The first primary positioning point is located above the second primary positioning point and has the predetermined color. The second primary positioning point has the signature color of the first application, so that the two-dimensional code has the signature color of the first application, thereby enabling the two-dimensional code to reflect the unique style of the first application through the signature color and improving the recognition of the two-dimensional code.

### BRIEF DESCRIPTION OF THE DRAWINGS

The above and other features, advantages and aspects of various embodiments of the present disclosure will become more apparent when taken in conjunction with the accompanying drawings and with reference to the following detailed description. Throughout the drawings, the same or similar reference numerals refer to the same or similar elements. It should be understood that the drawings are schematic and that the originals and elements are not necessarily drawn to scale.
Figure 1 is a schematic diagram of an architecture for displaying a two-dimensional code according to an embodiment of the present disclosure;
Figure 2 is a schematic flowchart of a method for displaying a two-dimensional code according to an embodiment of the present disclosure;
Figure 3 is a schematic diagram of a two-dimensional code image according to an embodiment of the present disclosure;
Figure 4 is a schematic diagram of a two-dimensional code image according to another embodiment of the present disclosure;
Figure 5 is a schematic diagram of a two-dimensional code image according to yet another embodiment of the present disclosure;
Figure 6 is a schematic diagram of a two-dimensional code image according to still yet another embodiment of the present disclosure;
Figure 7 is a schematic diagram of a two-dimensional code image border according to an embodiment of the present disclosure;
Figure 8 is a schematic diagram of a two-dimensional code image border according to another embodiment of the present disclosure;
Figure 9 is a schematic diagram of a two-dimensional code image border according to yet another embodiment of the present disclosure;
Figure 10 is a schematic diagram of a two-dimensional code image border according to still yet another embodiment of the present disclosure;
Figure 11 is a schematic diagram of a two-dimensional code image border according to still yet another embodiment of the present disclosure;
Figure 12 is a schematic diagram of an interface for displaying a two-dimensional code image according to an embodiment of the present disclosure;
Figure 13 is a schematic flowchart of a method for displaying a two-dimensional code according to another embodiment of the present disclosure;
Figure 14 is a schematic diagram of an interface for displaying a two-dimensional code image according to another embodiment of the present disclosure;
Figure 15 is a schematic diagram of a principle for generating a background image according to an embodiment of the present disclosure;
Figure 16 is a schematic diagram of a principle for generating a background image according to another embodiment of the present disclosure;
Figure 17 is a schematic structural diagram of an apparatus for displaying a two-dimensional code according to an embodiment of the present disclosure; and
Figure 18 is a schematic structural diagram of an electronic device according to an embodiment of the present disclosure.

### DETAILED DESCRIPTION OF EMBODIMENTS

The embodiments of the present disclosure are described in detail below with reference to the drawings. Although some embodiments of the present disclosure are shown in the drawings, it should be understood that the present disclosure may be implemented in various forms and should not be limited to the embodiments described herein. The embodiments are provided for thoroughly and completely understanding the present disclosure. It should be understood that the drawings and the embodiments of the present disclosure are exemplary and are not intended to limit the protection scope of the present disclosure.

It should be understood that the steps in the method embodiments of the present disclosure may be performed in different orders and/or in parallel. In addition, the method embodiments may include an additional step and/or a step shown herein may be omitted. The scope of the present disclosure is not limited in this aspect.

The term "include" and its variations in the present disclosure means open-ended inclusion, that is, "including but not limited to". The term "based on" means "based at least in part on". The term "one embodiment" means "at least one embodiment". The term "another embodiment" means "at least one additional embodiment". The term "some embodiments" means "at least some embodiments". The definitions of other terms are provided in the following descriptions.

It should be noted that the wordings such as "first" and "second" used in the present disclosure are used to distinguish different apparatuses, modules or units, and are not used to limit a sequential order or interdependence of the functions performed by the apparatuses, modules or units.

It should be noted that the wordings such as "one" and "multiple" used in the present disclosure are illustrative and not restrictive. Those skilled in the art should understand that the wordings should be understood as "one or more" unless otherwise expressly indicated in the context.

The names of messages or information exchanged between multiple apparatuses in the embodiments of the present disclosure are only for illustrative purposes, and are not intended to limit the scope of the messages or information.

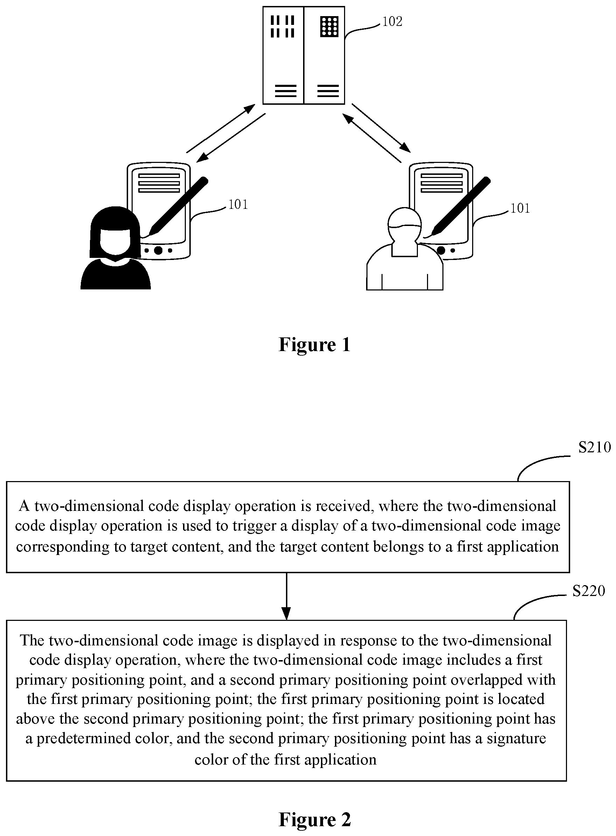

A method for displaying a two-dimensional code according to the present disclosure may be applied to an architecture shown in Figure 1, which will be described in detail with reference to Figure 1.

Figure 1 illustrates a schematic diagram of an architecture for displaying a two-dimensional code according to an embodiment of the present disclosure.

As shown in Figure 1, an architecture 100 for displaying a two-dimensional code may include at least one electronic device 101 on a client side and at least one server 102 on a server side. The electronic device 101 may establish a connection with the server 102 and perform information interaction with the server 102 via a network protocol such as Hyper Text Transfer Protocol over Secure Socket Layer (HTTPS). The electronic device 101 may include a device with a communication function, such as, a mobile phone, a tablet computer, a desktop computer, a notebook computer, a vehicle-mounted terminal, a wearable electric device, an all-in-one computer, and a smart home device; or a device that is simulated by a virtual machine or an emulator. The server 102 may be a device with storage and computing functions, such as a cloud server or a server cluster.

Based on the above architecture, the user may display, on the electronic device 101, a two-dimensional code image corresponding to target content belonging to a specified application.

When a user wants to display on the electronic device 101 the two-dimensional code image corresponding to the target content belonging to the specified application, the user may input a two-dimensional code display operation to the electronic device 101. The electronic device 101 receives the two-dimensional code display operation and displays a two-dimensional code image corresponding to the target content, in response to the two-dimensional code display operation.

The two-dimensional code image displayed on the electronic device 101 may include a first primary positioning point, and a second primary positioning point overlapped with the first primary positioning point. The first primary positioning point may be located above the second primary positioning point and have a predetermined color. The second primary positioning point may have a signature color of the specified application, so that the two-dimensional code has the signature color of the specified application. The two-dimensional code can reflect the unique style of the predetermined application through the signature color, thereby improving the recognition of the two-dimensional code.

In an embodiment, the two-dimensional code image may be generated by the server 102 of the specified application. Alternatively, the two-dimensional code image may be generated by the electronic device 101, for example, by the specified application, which is not limited herein.

In some examples, when the two-dimensional code display operation is an operation on a two-dimensional code image that is not locally stored in the electronic device 101, the electronic device 101 may send a two-dimensional code acquisition request carrying the target content to the server 102 of the specified application, after receiving the two-dimensional code display operation inputted by the user in the specified application. The server 102 sends a two-dimensional code image corresponding to the target content to the electronic device 101, in response to the two-dimensional code acquisition request.

In the case that the two-dimensional code image is generated in real time based on the target content, the server 102 may receive the two-dimensional code acquisition request carrying the target content from the electronic device 101, generate a two-dimensional code image in response to the two-dimensional code acquisition request, and send the generated two-dimensional code image to the electronic device 101. The two-dimensional code image may include the first primary positioning point and the second primary positioning point overlapped with each other as described above. In this case, the server 102 may generate different two-dimensional code images in real time based on the same target content at different times.

It should be noted that in the case that the two-dimensional code image is generated in real time based on the target content, the electronic device 101 may generate a two-dimensional code image including the first primary positioning point and the second primary positioning point overlapped with each other as described above, in response to a reception of the two-dimensional code display operation inputted by the user in the specified application, which is not repeated herein.

In the case that the two-dimensional code image is generated in advance based on the target content, the server 102 may receive a two-dimensional code acquisition request carrying the target content from the electronic device 101; search for the two-dimensional code image corresponding to the target content from stored images, in response to the two-dimensional code acquisition request; and send the found two-dimensional code image to the electronic device 101. The two-dimensional code image may be generated by the server 102 in advance, based on the first primary positioning point and the second primary positioning point overlapped with each other as described above. In this case, the server 102 finds the same two-dimensional code image each time based on the same target content.

It should be noted that in the case that the two-dimensional code image is generated in advance based on the target content, the electronic device 101 may search for the two-dimensional code image corresponding to the target content from the stored images after a reception of the two-dimensional code display operation inputted by the user in the specified application, which is not repeated herein.

Further, the electronic device 101 may receive the two-dimensional code image sent by the server 102, and then display the two-dimensional code image.

Therefore, in these examples, the two-dimensional code image that is not stored locally on the electronic device 101 may be displayed for the user on the electronic device 101.

In the scenario where the user uses the two-dimensional code to share information, the target content may be to-be-shared information in the specified application or a fetch address of a page used to display the to-be-shared information in the specified application. The two-dimensional code image may be a shared two-dimensional code image generated based on the to-be-shared information or the fetch address. In this case, when the shared two-dimensional code image is displayed or sent to a sharing recipient, the shared two-dimensional code image can reflect the unique style of the specified application through the signature color. In this way, the aesthetics of the two-dimensional code is increased. In addition, the sharing recipient can quickly understand the application to which the two-dimensional code belongs based on the signature color, thereby improving the recognition of the two-dimensional code.

It should be noted that in addition to scenarios where the user use the two-dimensional code to share information, the architecture shown in Figure 1 can be applied to other scenarios where the two-dimensional code is displayed or used, which is not limited herein.

In other examples, when the two-dimensional code display operation is an operation for a two-dimensional code image locally stored in the electronic device 101, the electronic device 101 may directly display the locally stored two-dimensional code image.

In these examples, the electronic device 101 may receive a two-dimensional code image from the server 102 in advance, and store the received two-dimensional code image locally.

Thus, in these examples, the locally stored two-dimensional code image may be displayed by the user on the electronic device 101.

In accordance with the above architecture, a method for display a two-dimensional code according to embodiments of the present disclosure is described below in conjunction with Figure 2 to Figure 16. In the embodiments of the present disclosure, the method for displaying the two-dimensional code may be performed by an electronic device. In some embodiments, the electronic device may be the electronic device 101 in the client shown in Figure 1. The electronic device may include a device with a communication function, such as, a mobile phone, a tablet computer, a desktop computer, a laptop computer, a vehicle-mounted terminal, a wearable electronic device, an all-in-one computer, and a smart home device, or a device that is simulated by a virtual machine or an emulator.

Figure 2 illustrates a schematic flowchart of a method for displaying a two-dimensional code according to an embodiment of the present disclosure.

As shown in Figure 2, the method for displaying the two-dimensional code may include the following steps S210 to S220.

In step S210, a two-dimensional code display operation is received, where the two-dimensional code display operation is used to trigger a display of a two-dimensional code image corresponding to target content, and the target content belongs to a first application.

**In** an embodiment of the present disclosure, when a user wants to display on the electronic device a two-dimensional code image corresponding to the target content belonging to the first application, the user may input a two-dimensional code display operation for triggering the display of the two-dimensional code image to the electronic device. The electronic device receives the two-dimensional code display operation.

The first application may be any application, and the target content may be any content belonging to the first application, which will not be limited herein.

For example, the first application may include an application having an information sharing function. The target content may include any to-be-shared information in the first application or a fetch address of a page for displaying the to-be-shared information. The two-dimensional code image may include the to-be-shared information or a shared two-dimensional code image corresponding to the fetch address.

In an embodiment, the to-be-shared information may include at least one of user personal social page information, a user social business card, social platform information, an image, a collection of images, a video, a collection of videos, special effects, music, an image editing template, a video editing template, and the like.

It is to be noted that the to-be-shared information may also be information to be displayed or shared by other users via a two-dimensional code, which is not limited herein.

In step S220, the two-dimensional code image is displayed in response to the two-dimensional code display operation, where the two-dimensional code image includes a first primary positioning point, and a second primary positioning point overlapped with the first primary positioning point; the first primary positioning point is located above the second primary positioning point; the first primary positioning point has a predetermined color, and the second primary positioning point has a signature color of the first application.

In an embodiment of the present disclosure, after receiving a two-dimensional code display operation inputted by the user, the electronic device may display the two-dimensional code image corresponding to the target content belonging to the first application in response to the two-dimensional code display operation.

In an embodiment, the electronic device may display the two-dimensional code image in full screen, or may display the two-dimensional code image in any position in non-full screen, which will not be limited herein.

In some embodiments of the present disclosure, the two-dimensional code image may be a rectangular image. The two-dimensional code image may include two or three sets of the first primary positioning point and the second primary positioning point overlapped with each other. In each set, the first primary positioning point and the second primary positioning point overlapped with each other may be arranged at one predetermined vertex of the two-dimensional code image.

In some embodiments, the two-dimensional code image may include two sets of the first primary positioning point and the second primary positioning point overlapped with each other. The two sets of the first primary positioning point and the second primary positioning point overlapped with each other may be located at two adjacent predetermined vertices of the two-dimensional code image, respectively.

In other embodiments, the two-dimensional code image may include three sets of the first primary positioning point and the second primary positioning point overlapped with each other. The three sets of the first primary positioning point and the second primary positioning point overlapped with each other are located at three predetermined vertices of the two-dimensional code image, such that centers of the three sets of the first primary positioning point and the second primary positioning point overlapped with each other may form an isosceles right triangle.

In some embodiments of the present disclosure, the number of the first primary positioning point in each set may be one or more, which is not limited herein.

In an embodiment, in the case that each set includes multiple first primary positioning points, multiple first primary positioning points may also be overlapped with each other.

In some embodiments of the present disclosure, the number of the second primary positioning point in each set may be one or more, which is not limited herein.

In an embodiment, in the case that each set includes one second primary positioning point, if each set includes one first primary positioning point, the second primary positioning point may be overlapped with any portion of the first primary positioning point. If each set includes multiple first primary positioning points, the second primary positioning point may be overlapped with any portion of at least one first primary positioning point.

In an embodiment, in the case that each set includes multiple second primary positioning points, if each set includes one first primary positioning point, the second primary positioning points may be overlapped with different portions of the first primary positioning point. Overlapped portions of the second primary positioning points with the first primary positioning point may be partially overlapped.

For example, if each set includes one first primary positioning point and two second primary positioning points, the two second primary positioning points overlap with the first primary positioning point so that the centers of the two second primary positioning points are in line with the center of the first primary positioning point and the centers of the two second primary positioning points are located on two sides of the center of the first primary positioning point.

In an embodiment, in the case that each set includes multiple second primary positioning points, if each set includes multiple first primary positioning points, second primary positioning points may be overlapped with different portions of the at least one first primary positioning point. Overlapped portion of the second primary positioning points with the first primary positioning point may be partially overlapped.

For example, if each set includes two first primary positioning points and two second primary positioning points, the two first primary positioning points may be overlapped with each other and the two second primary positioning points may be overlapped with the two first primary positioning points, so that the centers of the two second primary positioning points may be in line with the centers of the two first primary positioning points and the centers of the two second primary positioning points may be located on two sides of the centers of the two first primary positioning points.

In some embodiments of the present disclosure, the first primary positioning point may have a predetermined color. That is, the first primary positioning point may be displayed in the predetermined color.

In an embodiment, the predetermined color may include at least one of black and other colors that are black after binarization, which will not be limited herein.

In some embodiments of the present disclosure, the second primary positioning point may have the signature color of the first application. That is, the second primary positioning point may be displayed in the signature color of the first application.

The signature color may include a color contained in a signature icon of the first application.

In an embodiment, the signature icon may include a Logotype (LOGO) of the first application.

In an embodiment, the signature color of the first application may include at least one of at least one first type of colors and at least one second type of colors. The color obtained by binarizing the first type of colors is the same as the predetermined color. The color obtained by binarizing the second type of colors is different from the predetermined color. The signature color is not limited herein.

In an embodiment, the number of the first type of colors may be one or more, which is not limited herein.

In an embodiment, the number of the second type of colors may be one or more, which is not limited herein.

In some embodiments of the present disclosure, the first primary positioning point may be located above the second primary positioning point, such that the overlapped portion of the first primary positioning point and the second primary positioning point may have a predetermined color, i.e., the overlapped portion may be displayed in the predetermined color.

The first primary positioning point and the second primary positioning point are described in detail below with a specific example.

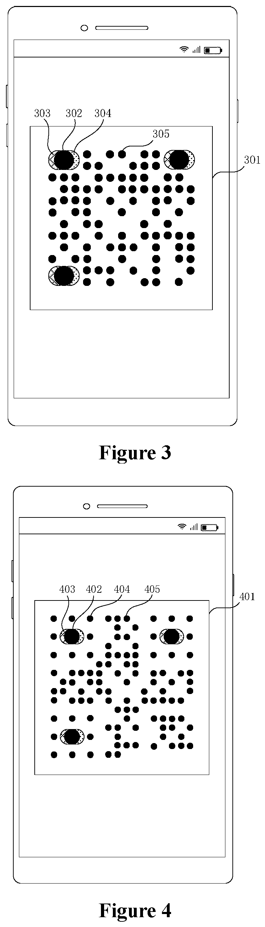

Figure 3 illustrates a schematic diagram of a two-dimensional code image according to an embodiment of the present disclosure.

As shown in Figure 3, the electronic device may display a two-dimensional code image 301, the two-dimensional code image 301 may include three sets of a first primary positioning point and a second primary positioning point overlapped with each other. The three sets of the first primary positioning point and the second primary positioning point overlapped with each other may be located at an upper left vertex, a lower left vertex, and an upper right vertex of the two-dimensional code image 301.

The first primary positioning point may include a first color primary positioning point 302 (such as a large black dot in Figure 3), and the second primary positioning point may include a second color primary positioning point 303 (such as a grid-filled large dot in Figure 3) and a third color primary positioning point 304 (such as a dot-filled large dot in Figure 3). The first color primary positioning point 302 is overlapped with the second color primary positioning point 303 and the third color primary positioning point 304, and the first color primary positioning point 302 is located above the second color primary positioning point 303 and the third color primary positioning point 304.

The center of the first color primary positioning point 302 is in line with the centers of the second color primary positioning point 303 and the third color primary positioning point 304. The center of the second color primary positioning point 303 is located to the left of the first color primary positioning point 302, and the center of the third color primary positioning point 304 is located to the right of the first color primary positioning point 302.

In an embodiment, taking the predetermined color including black and the signature color including red and blue as an example, the color obtained by binarizing red is black and the color obtained by binarizing blue is white. The first color primary positioning point 302 may be a black primary positioning point, the second color primary positioning point 303 may be a red primary positioning point, and the third color primary positioning point 304 may be a blue primary positioning point.

In an embodiment of the present disclosure, the two-dimensional code image corresponding to the target content in the first application can be displayed based on the two-dimensional code display operation. The two-dimensional code image may include the first primary positioning point, and the second primary positioning point overlapped with the first primary positioning point. The first primary positioning point is located above the second primary positioning point and has a predetermined color. The second primary positioning point has the signature color of the first application, such that the two-dimensional code has the signature color of the first application. Thus, the two-dimensional code can reflect the unique style of the first application through the signature color, improving the recognition of the two-dimensional code.

Returning to Figure 2, the two-dimensional code display operation in step S210 is further described below.

In some embodiments of the present disclosure, the two-dimensional code display operation may be used to trigger a display of a two-dimensional code image that is not stored in a local target storage space of the electronic device.

The two-dimensional code display operation may be a click, long press, double click, voice control, or facial control on a first control in the first application.

The first control may be used to trigger the display of the two-dimensional code image that is not stored in the local target storage of the electronic device.

For example, in the case that the two-dimensional code image is a shared two-dimensional code image, the first control may be a "share" button. Therefore, the electronic device can display a two-dimensional code image that is not stored in the local target storage of the electronic device through the two-dimensional code display operation of the user.

In other embodiments of the present disclosure, the two-dimensional code display operation may be used to trigger a display of a two-dimensional code image stored in the local target storage of the electronic device. The two-dimensional code display operation may be a click, long press, double click, voice control, or facial control on a second control local to the electronic device. In some examples, the second control may be used to trigger an opening of a target storage in which the two-dimensional code image is stored, such that the electronic device can display the two-dimensional code image. For example, the target storage may be a photo album and the second control may be a photo album icon displayed on the desktop of the electronic device. In other examples, the second control may be used to trigger a display of a two-dimensional code image stored in the target storage. For example, the target storage may be a photo album and the second control may be a preview image of the two-dimensional code image displayed in the photo album.

The two-dimensional code display operation in step S210 is further illustrated above, and a method for the electronic device obtaining the two-dimensional code image for display is illustrated hereinafter.

In some embodiments of the present disclosure, in the case that the two-dimensional code display operation is used to trigger the display of the two-dimensional code image that is not stored in the local target storage of the electronic device and the two-dimensional code image is generated by the server of the first application, before step S220, the method for displaying the two-dimensional code may further include: sending a two-dimensional code acquisition request carrying the target content to a server of the first application, where the two-dimensional code acquisition request is used to instruct the server to provide a two-dimensional code image corresponding to the target content; and receiving the two-dimensional code image fed back from the server.

The server may be the server 102 in the embodiment shown in Figure 1. The server may be a device with storage and computing functions, such as, a cloud server or a server cluster.

After receiving the two-dimensional code display operation, the electronic device may send the two-dimensional code acquisition request carrying the target content to the server of the first application, in response to the two-dimensional code display operation. The server receives the two-dimensional code acquisition request carrying the target content from the electronic device, and sent the two-dimensional code image corresponding to the target content to the electronic device in response to the two-dimensional code acquisition request. The electronic device may receive the two-dimensional code image fed back from the server and display the two-dimensional code image.

In some embodiments, in the case that the two-dimensional code image is generated in real time based on the target content, the two-dimensional code acquisition request may be used to cause the server to generate and provide the two-dimensional code image corresponding to the target content.

Thereby, the server may generate the two-dimensional code image corresponding to the target content based on the first primary positioning point and the second primary positioning point overlapped with each other as described above, in response to the two-dimensional code acquisition request; and send the generated two-dimensional code image to the electronic device.

In other embodiments, in the case that the two-dimensional code image is generated in advance based on the target content, the two-dimensional code acquisition request may be used to cause the server to search for and provide the two-dimensional code image corresponding to the target content.

The server may search for the two-dimensional code image corresponding to the target content from stored images, in response to the two-dimensional code acquisition request; and send the found two-dimensional code image to the electronic device.

The two-dimensional code image may be generated by the server in advance based on the first primary positioning point and the second primary positioning point overlapped with each other as described above.

In other embodiments of the present disclosure, in the case that the two-dimensional code display operation is used to trigger the display of the two-dimensional code image not stored in the local target storage of the electronic device and the two-dimensional code image is generated by the electronic device via the first application, before step S220, the method for displaying the two-dimensional code may further include: generating a two-dimensional code image corresponding to the target content. The method for generating the two-dimensional code image by the electronic device is similar to that by the server, which will not be repeated herein.

In another embodiment of the present disclosure, in order to improve the positioning accuracy of the two-dimensional code image, the two-dimensional code image may further include auxiliary positioning points, which may be uniformly arranged around the first primary positioning point and the second primary positioning point overlapped with each other.

In an embodiment, the two-dimensional code image may include at least one set of auxiliary positioning points. The number of sets of auxiliary positioning points may be the same as the number of sets of the first primary positioning point and the second primary positioning point overlapped with each other. One set of auxiliary positioning points are uniformly arranged around one set of the first primary positioning point and the second primary positioning point overlapped with each other. In an embodiment, the number of auxiliary positioning points in each set may be a multiple of four. For example, the number of auxiliary positioning points may be 4, 8, 12, or the like, which is not limited herein. After the auxiliary positioning points are uniformly arranged around the first primary positioning point and the second primary positioning point overlapped with each other, the centers of sets of auxiliary positioning points may form a rectangle.

In some embodiments of the present disclosure, the auxiliary positioning points may have the predetermined color described above.

The auxiliary positioning points in these embodiments are described in detail below with a specific example.

Figure 4 illustrates a schematic diagram of a two-dimensional code image according to another embodiment of the present disclosure.

As shown in Figure 4, the electronic device may display a two-dimensional code image 401. The two-dimensional code image 401 may include three sets of a first primary positioning point 402 and a second primary positioning point 403 overlapped with each other, and three sets of auxiliary positioning points 404.

The first primary positioning point 402 and the second primary positioning point 403 are similar to the first primary positioning point and the second primary positioning point in the embodiment shown in Figure 3, which will not be described herein.

The number of auxiliary positioning points 404 in each set may be 8. One set of auxiliary positioning points 404 may be uniformly arranged around one set of a first primary positioning point 402 and a second primary positioning point 403.

In the case that the predetermined color includes black, the auxiliary positioning points 404 may be black.

In other embodiments of the present disclosure, in the case that the signature color includes a first type of color and a color obtained by binarizing the first type of color is the same as the predetermined color, the auxiliary positioning points may include a first auxiliary positioning point and a second auxiliary positioning point. The first auxiliary positioning point may have the predetermined color, and the second auxiliary positioning point may have the first type of color.

Since the color obtained by binarizing the first type of color is the same as the predetermined color, the color obtained by binarizing the first type of color remains black. Thus, the positioning function of the second auxiliary positioning point is not affected even if the second auxiliary positioning point has the first type of color.

In an embodiment, a percentage of the second auxiliary positioning point in the auxiliary positioning points may be a first predetermined proportion. The first predetermined proportion may be any value in the range (0, 1), which is not limited herein. For example, taking the number of auxiliary positioning points in each set being 8 as an example, the first predetermined proportion may be 1/8 or 1/4.

In the above embodiments, in the process of generating the two-dimensional code image, the server or the electronic device may generate auxiliary positioning points corresponding to each set of the first primary positioning point and the second primary positioning point. The respective auxiliary positioning points have a predetermined color such as black. Then, a first predetermined proportion of auxiliary positioning points may be randomly selected in each set, and the selected auxiliary positioning points are converted from the predetermined color to the first type of colors such as red. In this way, each set of auxiliary positioning points include the first auxiliary positioning point and the second auxiliary positioning point.

The auxiliary positioning points in these embodiments are described in detail below with a specific example.

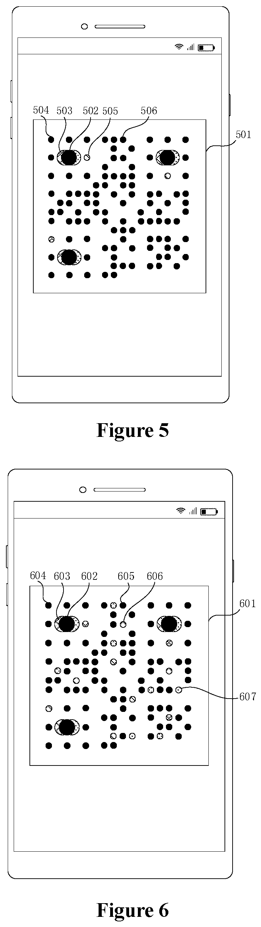

Figure 5 illustrates a schematic diagram of a two-dimensional image according to yet another embodiment of the present disclosure.

As shown in Figure 5, the electronic device may display a two-dimensional code image 501. The two-dimensional code image 501 may include three sets of a first primary positioning point 502 and a second primary positioning point 503 overlapped with each other, and three sets of auxiliary positioning points.

The first primary positioning point 502 and the second primary positioning point 503 are similar to the first primary positioning point and the second primary positioning point in the embodiment shown in Figure 3, which will not be described herein.

A case that the number of auxiliary positioning points in each set is 8, one set of auxiliary positioning points may be uniformly arranged around one set of the first primary positioning point 502 and the second primary positioning point 503, and a first pre-determined proportion is 1/8 is illustrated as an example. Each set of auxiliary positioning points may include seven first auxiliary positioning points 504 and one second auxiliary positioning point 505.

In the case that the predetermined color includes black and the first type of colors includes red, the first auxiliary positioning point 504 may be black and the second auxiliary positioning point 505 may be red.

Thus, in an embodiment of the present disclosure, the recognition of the two-dimensional code can be improved by the color of the second auxiliary positioning point in the auxiliary positioning points, without affecting the positioning effect of the two-dimensional code.

In a further embodiment of the present disclosure, the two-dimensional code image may further include a data point array. The data point array may be generated based on the target content, and the data point array may be used to enable a second application to acquire the target content.

Further, the second application may include at least one of the first application and other applications other than the first application, which is not limited herein. Thereby, the two-dimensional code image may be a universal two-dimensional code image.

In the case that the second application is the first application, the data point array may be used to enable the first application to obtain the target content directly by scanning or recognizing the two-dimensional code image, and to display the to-be-shared information corresponding to the target content.

In the case that the second application is an application other than the first application, the data point array may be used to enable the second application to obtain the target content of the first application in the second application by scanning or recognizing the two-dimensional code image, and display the to-be-shared information corresponding to the target content. For example, after scanning or recognizing the two-dimensional code image, the second application may convert the data point array into the target content, and display the to-be-shared information corresponding to the target content via a built-in browser page, an applet page, or a fifth generation hypertext markup language (HTML5, H5) page of the second application.

In the case that the second application is an application other than the first application, the data point array may further be used to enable the second application, after scanning or recognizing the two-dimensional code image, to jump to the first application to obtain the target content and display the to-be-shared information corresponding to the target content. For example, after scanning or recognizing the two-dimensional code image, the second application may convert the data point array into the target content, determine the first application to which the target content belongs, and then jump to the first application to cause the first application to display the to-be-shared information corresponding to the target content.

In some embodiments of the present disclosure, the data points in the data point array may have the predetermined color as described above, as shown in Figure 3 to Figure 5.

In Figure 3, the two-dimensional code image 301 may include a data point array, and the data point array may include data points 305. In the case that the predetermined color includes black, the data points 305 may be black.

In Figure 4, the two-dimensional code image 401 may include a data point array, and the data point array may include data points 405. In the case that the predetermined color includes black, the data points 405 may be black.

In Figure 5, the two-dimensional code image 501 may include a data point array, and the data point array may include data points 506. In the case that the predetermined color includes black, the data points 506 may be black.

In other embodiments of the present disclosure, the data point array may include a first data point and a second data point, the first data point may have the predetermined color described above, and the second data point may have the signature color described above.

In an embodiment, the signature color includes the first type of color. The color obtained by binarizing the first type of color is the same as the predetermined color. In this case, the second data point may include a first type of second data points. The first type of second data points may have the first type of color. The first data point and the first type of second data points may be generated based on the target content.

Since the color obtained by binarizing the first type of color is the same as the predetermined color, the color obtained by binarizing the first type of color remains black. Thus, even if the first type of second data point has the first type of color, the data recognition function will not be affected.

In an embodiment, the proportion of the first type of second data point in the total number of the first data point and the first type of second data point may be a second predetermined proportion. The second predetermined proportion may be any value in the range (0, 1), which is not limited herein. For example, the second predetermined proportion may be 1%, 3%, 5% or 10%, which is not limited herein.

In an embodiment, the signature color includes a second type of color. The color obtained by binarizing the second type of color is different from the predetermined color. In this case, the second data point may further include a second type of second data point. The second type of second data point may have a second type of color. Since a color obtained by binarizing the second type of color is different from the predetermined color, i.e., the color obtained by binarizing the second type of color is white, the content recognized based on the data point array will not be affected even if the second type of second data point has the second type of color.

In an embodiment, the proportion of the second type of second data points among the first data point and blank data point bits other than the first type of second data point in the two-dimensional code image may be a third predetermined proportion. The third predetermined proportion may be any value in the range (0, 1), which is not limited herein. For example, the third predetermined proportion may be 1%, 3%, 5% or 10%, which is not limited herein.

In these embodiments, the server may first generate an initial data point array based on the target content. In the initial data point array, each data point is a predetermined color such as black. Then, the server may randomly select a second predetermined proportion of data point in the initial data point array, and convert the selected data point from the predetermined color to a first type of color such as red, such that the data point array may include a first data point and the first type of second data point. Then, the server may randomly select the third predetermined proportion of blank data point among the blank data points in the data point array, and generate the second type of second data point having a second type of color such as blue at the selected blank data point. In this way, a final data point array including the first data point, the first type of second data point, and the second type of second data point is obtained.

The data point array in these embodiments is described in detail below with a specific example.

Figure 6 illustrates a schematic diagram of a two-dimensional code image according to still yet another embodiment of the present disclosure.

As shown in Figure 6, the electronic device may display a two-dimensional code image 601. The two-dimensional code image 601 may include three sets of a first primary positioning point 602 and a second primary positioning point 603 overlapped with each other, three sets of auxiliary positioning points 604, and a data point array.

The three sets of a first primary positioning point 602 and a second primary positioning point 603 overlapped with each other, and the corresponding three sets of auxiliary positioning points 604 are similar to the first primary positioning point 502, the second primary positioning point 503 and the auxiliary positioning points in the embodiment shown in Figure 5, which will not be described herein.

The data point array may include a first data point 605 (such as a black dot in Figure 6), a first type of second data point 606 (such as a grid-filled dot in Figure 6) and a second type of second data point 607 (such as a dot-filled dot in Figure 6).

In the case that the predetermined color includes black and the signature color includes red and blue, a color obtained by binarizing red is black and a color obtained by binarizing blue is white. The first data point 605 may be black, the first type of second data points 606 may be red, and the second type of second data points 607 may be blue.

Thus, in the embodiment of the disclosure, the recognition of the two-dimensional code may be improved by the color of the second data point in the data point array, without affecting the reliability of reading the information of the two-dimensional code.

In a further embodiment of the present disclosure, to further improve the recognition of the two-dimensional code, the two-dimensional code image may further include an image border, which may be generated based on the signature color.

In an embodiment, the image border may be a closed border. The closed border includes a sub-border having the signature color. The closed border may enclose a closed shape.

In the case that the signature color includes a first type of color and a second type of color, the image border may be a closed border which includes a first sub-border having a first type of color and a second sub-border having a second type of color.

The image border in these embodiments is described in detail below with a specific example.

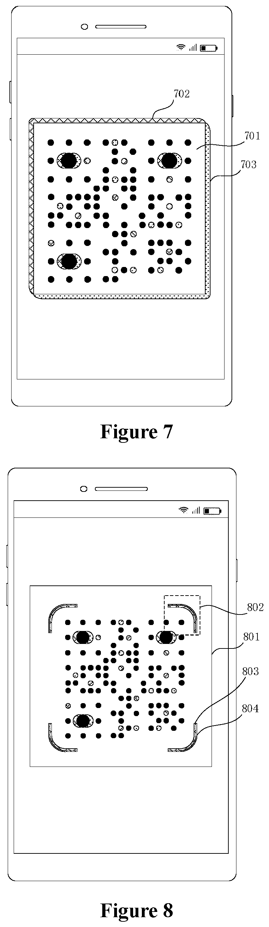

Figure 7 illustrates a schematic diagram of a two-dimensional code image border according to an embodiment of the present disclosure.

As shown in Figure 7, the electronic device may display a two-dimensional code image 701. An image border is provided at an image edge of the two-dimensional code image 701. The image border may include an L-shaped first sub-border 702 and an L-shaped second sub-border 703. The first sub-border 702 and the second sub-border 703 may enclose a rectangle.

In the case that the signature color includes red and blue, the color obtained by binarizing red is black and the color obtained by binarizing blue is white. The first sub-border 702 may be red and the second sub-border 703 may be blue.

It should be noted that the binary image 701 is similar to the two-dimensional code image shown in Figure 6, which will not be repeated herein.

In an embodiment, the image border may be an open border which includes sub-borders having the signature color. Every two adjacent sub-borders are not connected. If every two adjacent sub-borders are connected, a closed shape may be formed.

In the case that the signature color includes a first type of color and a second type of color, each sub-border of the image border may include a first sub-border portion having a first type of color and a second sub-border portion having a second type of color, respectively.

The image border in these embodiments is described in detail below with a specific example.

Figure 8 illustrates a schematic diagram of a two-dimensional image border according to another embodiment of the present disclosure.

As shown in Figure 8, a two-dimensional code image 801 may be displayed on the electronic device. An image border is provided for the two-dimensional code image 801. The image border includes four L-shaped sub-borders 802, which may be located at the four vertices of the two-dimensional code image 801. Each sub-border 802 may include one first sub-border portion 803 and one second sub-border portion 804. In addition, to beautify the two-dimensional code image, each L-shaped sub-border 802 may be provided with a rounded corner, i.e., a certain curvature at the corner of the L-shaped sub-border 802.

In the case that the signature color includes red and blue, a color obtained by binarizing red is black and a color obtained by binarizing blue is white. The first sub-border portion 803 may be red and the second sub-border portion 804 may be blue.

It should be noted that the two-dimensional code image 601 is similar to the two-dimensional code image shown in Figure 6, which will not be repeated herein.

In other embodiments of the present disclosure, the two-dimensional code image may further include content information of the target content. The content information may include at least one of a type icon of the target content and a content name of the target content.

In one embodiment, in the case that the image border is a closed border which includes sub-borders having the signature color, the content information may be located within the image border.

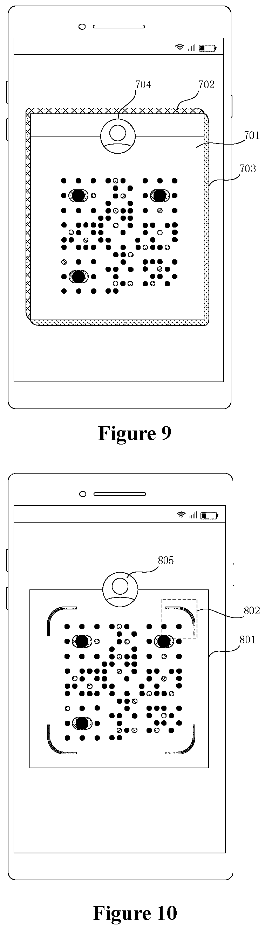

Figure 9 illustrates a schematic diagram of a two-dimensional code image border according to yet another embodiment of the present disclosure.

As shown in Figure 9, the electronic device may display a two-dimensional code image 701. An image border is provided at the image edge of the two-dimensional code image 701. The image border may include an L-shaped first sub-border 702 and an L-shaped second sub-border 703. The two-dimensional code image 701 may further include a type icon 704 of the target content. The type icon 704 may be used to display a type of the target content. The type icon 704 may be located within a rectangle enclosed by the first sub-border 702 and the second sub-border 703.

In the case that the image border is an open border which includes sub-borders with the signature color, the content information may be located outside the image border.

Figure 10 illustrates a schematic diagram of a two-dimensional image border according to still yet another embodiment of the present disclosure.

As shown in Figure 10, the electronic device may display a two-dimensional code image 801. An image border is provided in the two-dimensional code image 801. A type icon 805 for the target content may be provided at the top edge of the two-dimensional code image 801. The type icon 805 may be used to display a type of the target content, which may be located above the image border.

The image border may include four L-shaped sub-borders 802, which may be located at four vertices of the two-dimensional code image 801, respectively. Each sub-border 802 may include a first sub-border portion and a second sub-border portion.

In some further embodiments of the present disclosure, the image border may be generated based on the signature color and the predetermined color.

In an embodiment, the image border may be a closed border including a sub-border having the signature color and a sub-border having the pre-determined color. The closed border may enclose a closed shape.

In an embodiment, the image border may be an open border including sub-borders having the signature color and the predetermined color.

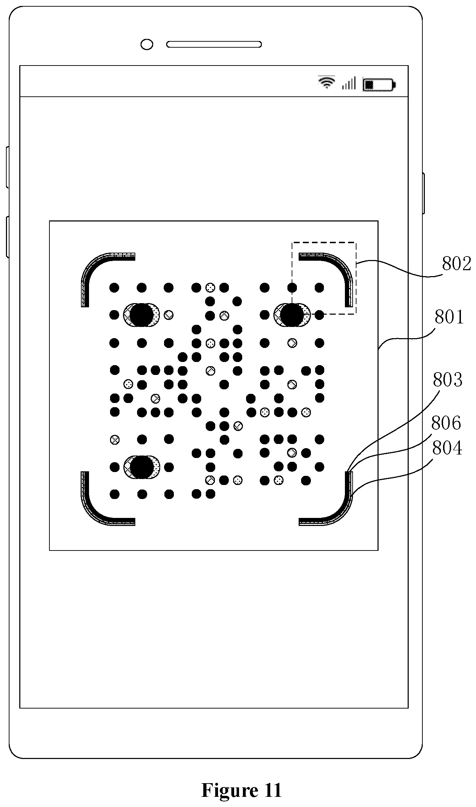

Figure 11 illustrates a schematic diagram of a two-dimensional image border according to still yet another embodiment of the present disclosure.

As shown in Figure 11, the electronic device may display a two-dimensional code image 801, and an image border is provided in the two-dimensional code image 801. The image border may include four L-shaped sub-borders 802, which may be located at four vertices of the two-dimensional code image 801. Each sub-border 802 may include a first sub-border portion 803, a second sub-border portion 804, and a third sub-border portion 806.

In the case that the predetermined color includes black and the signature color includes red and blue, a color obtained by binarizing red is black and a color obtained by binarizing blue is white. The first sub-border portion 803 may be red, the second sub-border portion 804 may be blue, and the third sub-border portion 806 may be black.

Thus, in the embodiments of the present disclosure, the recognition of the two-dimensional code can be further improved through the color of the image border of the two-dimensional code image.

In a further embodiment of the present disclosure, returning to Figure 2, after step S210, the method for displaying the two-dimensional code may further include: displaying a target control, in response to the two-dimensional code display operation.

In an embodiment, the target control may include at least one of a two-dimensional code storage control, a two-dimensional code scanning control, and a two-dimensional code sharing control.

In an embodiment, the target control may further include controls for triggering other functions, which will not be limited herein.

In an embodiment, the target control may be displayed at any location other than the two-dimensional code image, which is not limited herein. For example, the target control may be displayed at any location outside the two-dimensional code image, such as at the top, bottom, top right, top left, bottom left, or bottom right of the periphery of the two-dimensional code image.

A specific example of an interface on which a two-dimensional code image and a target control is displayed is described in detail hereinafter.

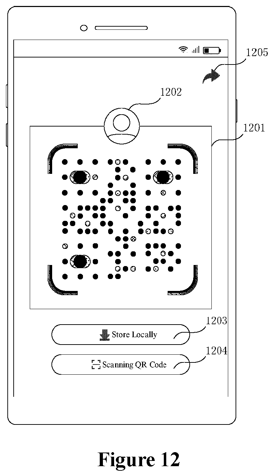

Figure 12 illustrates a schematic diagram of an interface for displaying a two-dimensional code image according to an embodiment of the present disclosure.

As shown in Figure 12, a two-dimensional code image 1201 and a target control may be displayed on the electronic device. A type icon 1202 for the target content may be provided at a top edge of the two-dimensional code image 1201. The target control may include a two-dimensional code storage control 1203, a two-dimensional code scanning control 1204, and a two-dimensional code sharing control 1205.

The two-dimensional code image 1201 is similar to the two-dimensional code image shown in Figure 11, which will not be repeated herein.

The two-dimensional code storage control 1203 may be used to store the two-dimensional code image locally. The two-dimensional code storage control 1203 may be a "Store Locally" button. The electronic device may store the two-dimensional code image to a target storage space of the electronic device locally, by clicking on the two-dimensional code storage control 1203 by the user.

The two-dimensional code scanning control 1204 may be used to scan a two-dimensional code image displayed on other electronic devices or a two-dimensional code image locally stored in the electronic device. The two-dimensional code scanning control 1204 may be a "Scan Two-dimensional Code" button. The electronic device may display a two-dimensional code scanning interface, by clicking on the two-dimensional code scanning control 1204 by the user; and scan the two-dimensional code image displayed by other electronic devices through the two-dimensional code scanning interface. The two-dimensional code scanning interface may further include, for example, an "Album" icon. The electronic device may display locally stored images by clicking on the "Album" icon by the user. Then, the user may click on any two-dimensional code image of the displayed images to cause the electronic device to scan the locally stored two-dimensional code image of the electronic device selected by the user.

The two-dimensional code sharing control 1205 may be used to share the two-dimensional code image to other users in the first application, or to users in applications other than the first application. The two-dimensional code sharing control 1205 may be a forward button. The electronic device may display other users in the first application or other applications other than the first application, by clicking on the two-dimensional code sharing control 1205 by the user. The user may click on at least one of the other users in the first application to cause the electronic device to send the two-dimensional code image to the selected another user via a chat window between the user in the first application and the selected another user. Alternatively, the electronic device may display sharing objects, such as users or social platforms, in the other applications selected by the user, by clicking on any one of other applications other than the first application by the user. The user may select at least one of the sharing objects in the other applications. If the sharing object in the other application selected by the user is a user, the electronic device may send the two-dimensional code image to the selected user through a chat window between the user in the other application selected by the user and the selected user. If the sharing object in the other application selected by the user is a social platform, the electronic device may upload the two-dimensional code image to the social platform in another application selected by the user.

In a further embodiment of the present disclosure, returning to Figure 2, in step S220, the electronic device may further display the two-dimensional code image on the interface displayed when the two-dimensional code display operation, in an overlapping manner.

In the case that the user inputs the two-dimensional code display operation in the display interface of the target content, the electronic device may, after receiving the two-dimensional code display operation, set a floating layer on a preview interface in response to the two-dimensional code display operation, and display the two-dimensional code image at any position in the floating layer.

For example, the target content may be a target video, and the display interface may be a video display interface. The electronic device may directly display the two-dimensional code image at the middle of the video display interface in the overlapping manner, after the user inputs the two-dimensional code display operation in the video display interface.

In some embodiments of the present disclosure, in the case that the electronic device may display both the two-dimensional code image and the target control in response to the two-dimensional code display operation, the electronic device may further display the two-dimensional code image and the target control on the interface displayed when the two-dimensional code display operation is received, in the overlapping manner. For example, the floating layer is provided on the interface displayed when the two-dimensional code display operation is received, and the two-dimensional code image and the target control are displayed at any position in the floating layer.

Thus, in the embodiments of the present disclosure, the electronic device may directly display the two-dimensional code image on the interface displayed when the two-dimensional code display operation is received, in the overlapping manner, reducing the number of page jumps and improving the user experience.

In a further embodiment of the present disclosure, S220 may further specifically include: displaying the two-dimensional code image on a first background image.

The first background image may be displayed in full screen or may be displayed at any location on the interface displayed when the two-dimensional code display operation is received, which will not be limited herein.

In an embodiment, the first background image may be a predetermined image. The predetermined image may be any preset image, which will not be limited herein.

In some embodiments, the first background image may be generated based on a first color.

In some examples, the first color may be a predetermined background color. The predetermined background color may be any predetermined color, which is not limited herein.

In other examples, the first color may be determined based on the two-dimensional code display operation.

For example, if the two-dimensional code display operation is an operation used to trigger a display of a two-dimensional code image corresponding to the target content for the first time, the first color may be a predetermined background color. The predetermined background color may be any preset color, which is not limited herein. For another example, if the two-dimensional code display operation is not the operation used to trigger the display of the two-dimensional code image corresponding to the target content for the first time, the first color may be a color corresponding to a background image finally selected by the user when the two-dimensional code image was last displayed.

In these embodiments, accordingly, after step S220, the method for displaying the two-dimensional code may further include: receiving an image change operation, where the image change operation is used to replace the first background image with a second background image; and replacing the first background image with the second background image for display, in response to the image change operation.

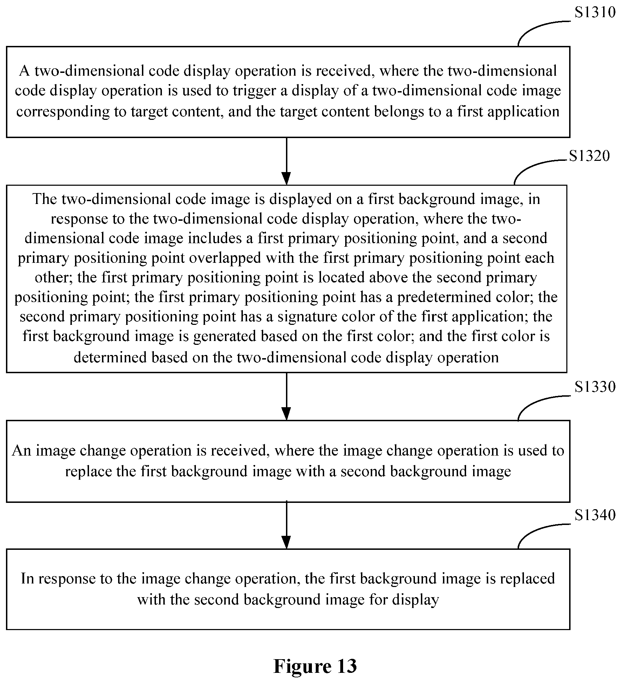

The method for displaying the two-dimensional code according to Figure 13 will be described in detail below.

Figure 13 illustrates a schematic flowchart of a method for displaying a two-dimensional code according to another embodiment of the present disclosure.

As shown in Figure 13, the method for displaying the two-dimensional code may include the following steps S1310 to S 1340.

In step S1310, a two-dimensional code display operation is received, where the two-dimensional code display operation is used to trigger a display of a two-dimensional code image corresponding to target content, and the target content belongs to a first application.

Step S1310 is similar to step S210 in the embodiment shown in Figure 2, which will not be repeated herein.

In step S1320, a two-dimensional code image is displayed on a first background image, in response to the two-dimensional code display operation, where the two-dimensional code image includes a first primary positioning point, and a second primary positioning point overlapped with the first primary positioning point; the first primary positioning point is located above the second primary positioning point; the first primary positioning point has a predetermined color; the second primary positioning point has a signature color of the first application; the first background image is generated based on the first color; and the first color is determined based on the two-dimensional code display operation.

In an embodiment of the present disclosure, the first color may be determined based on the two-dimensional code display operation.

In some embodiments, if the two-dimensional code display operation is an operation used to trigger the display of the two-dimensional code image corresponding to the target content for the first time, the first color may be a predetermined background color. The predetermined background color may be any preset color, which is not limited herein.

In other embodiments, if the two-dimensional code display operation is not the operation used to trigger display of a two-dimensional code image corresponding to the target content for the first time, the first color may be a color corresponding to the background image finally selected by the user when the two-dimensional code image was last displayed.

In an embodiment of the present disclosure, the first background image may be generated based on the first color.

In some embodiments, the first background image may be an image generated in real time based on the first color.

In an embodiment, before step S1320, the method for displaying the two-dimensional code may further include: generating a first background image based on the first color.

Therefore, after receiving the two-dimensional code display operation, the electronic device may first generate the first background image based on the first color, in response to the two-dimensional code display operation, and then display the two-dimensional code image on the first background image.

The two-dimensional code image is illustrated in the above embodiments, which will not be repeated herein.

In these embodiments, the first background image may be a solid color image generated based on the first color. Alternatively, the first background image may be a color gradient image obtained by performing a color gradient processing on the first color based on a target color, which is not limited in the present disclosure herein. The target color may be any predetermined color, such as white.

Further, in the case that the first background image is a color gradient image, a color gradient center may be located within the first background image or outside the first background image, which is not limited herein. Further, the color gradient center may be fixedly set or may be randomly set, which is not limited herein.

In an embodiment, after receiving the two-dimensional code display operation the electronic device may first fill the first color in a canvas to generate the first background color image, in response to the two-dimensional code display operation; determine the color gradient center; perform color gradient processing on the first color background image to obtain the first background image, based on the determined color gradient center and the target color; and then display the two-dimensional code image on the first background image.

In other embodiments, the first background image may be an image generated in advance based on the first color.

In an embodiment, before step S1320, the method for displaying the two-dimensional code may further include: querying the first background image corresponding to the first color.

In some embodiments, if the two-dimensional code display operation is the operation used to trigger display of a two-dimensional code image corresponding to the target content for the first time, the electronic device may query the first background image corresponding to the first color, in predetermined background images corresponding to colors stored in advance. The predetermined background images may be generated by using the method for generating the first background image in real-time as described above, which is not repeated herein.

In the case that one color corresponds to multiple predetermined background images, the electronic device may randomly select one of the predetermined background images corresponding to the first color, and use the selected predetermined background image as the first background image.

In other embodiments, if the two-dimensional code display operation is not the operation used to trigger display of a two-dimensional code image corresponding to the target content for the first time, the electronic device may obtain a background image that is finally selected by the user when the two-dimensional code image was last displayed.

In step S1330, an image change operation is received, where the image change operation is used to replace the first background image with a second background image.

In some embodiments of the present disclosure, the image change operation may be a selection operation for the second background image.

The image change operation may include a click, long press, double click, voice control, expression control and other operations on a third control for triggering the display of multiple images, and a selection operation on the second background image among the multiple images. Optionally, the multiple images may include at least one of a local image of the electronic device and an internet image, which will not be limited herein. In an embodiment, the multiple images may include at least one of a static image and a motion image such as a video, which is not limited herein.

The image change operation in the embodiments may be illustrated below with a specific example.

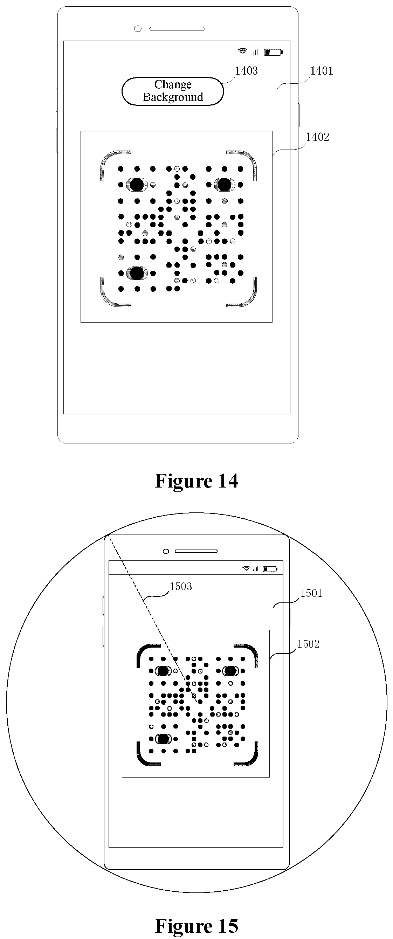

Figure 14 illustrates a schematic diagram of an interface for displaying a two-dimensional code image according to another embodiment of the present disclosure.

As shown in Figure 14, the electronic device may display a first background image 1401 in full screen. A two-dimensional code image 1402 and a third control 1403 such as a "Change Background" button may be displayed on the first background image 1401 in the overlapping manner. The two-dimensional code image 1402 may be located in the middle of the first background image 1401 and the third control 1403 may be located above the two-dimensional code image 1402.

The album of the electronic device may be accessed by clicking on the third control 1403 by the user, and an image in the album may be selected as a second background image, such that the electronic device may replace the first background image 1401 with the second background image.

In other embodiments of the present disclosure, the image change operation may be an operation for triggering a background color change.

In an embodiment, the second color may be determined based on the image change operation.

In some embodiments, multiple colors may be stored in advance in the electronic device, and the image change operation may be used to select the second color.

The image change operation may include an operation, such as, a click and a long press, on a fourth control for triggering display of multiple colors or on any display position; and an operation for selecting the second color from the multiple colors.

In other embodiments, multiple colors may be stored in advance in the electronic device and the image change operation may be used to trigger the electronic device to select the second color.

The image change operation may include an operation, such as a click and long press, inputted by the user at any display location.

In some examples, the electronic device may randomly select a second color different from the first color, from the multiple colors in response to the image change operation.

In other examples, multiple colors may be pre-stored in the electronic device in a cyclic arrangement in a predetermined order. The electronic device may determine the total number of image change operations received after the first background image is displayed, in response to the image change operation. Based on that total number, the electronic device may determine a sort position difference between the second color and the first color. Then, based on the sort position difference, the electronic device may select the second color after the first color, from the multiple colors in the cyclic arrangement.

In an embodiment of the present disclosure, the second background image may be a solid color image generated based on the second color. Alternatively, the second background image may include a color gradient image corresponding to the second color. The present disclosure is not limited herein.

In step S1340, in response to the image change operation, the first background image is replaced with the second background image for display.

In an embodiment of the present disclosure, after receiving the image change operation, the electronic device may replace the first background image with the second background image for display in response to the image change operation.

In an embodiment, step S1340 may specifically include: expanding the second background image in a predetermined radius increment, with an operation position of the image change operation as a center, until the first background image is replaced with the second background image. The operation position may be a touch center point of the image change operation on the display screen of the electronic device.

In an embodiment, the electronic device may gradually expand the circular display area on the first background image from small to large based on a predetermined radius increment, with the operation position of the image change operation as the center; and display the image content at a corresponding position of the second background image within the circular display area, until the circular display area completely covers the first background image. Thus, the first background image may be replaced with the second background image for display.

Thus, in the embodiment of the present disclosure, the user may personalize the background image of the two-dimensional code image, further improving the user experience.

In some embodiments of the present disclosure, the second background image may be an image generated in real time based on a second color.

In an embodiment, before step S1340, the method for displaying the two-dimensional code may further include: generating the second background image based on the second color.

In some embodiments, in the case that the second background image includes a color gradient image corresponding to the second color, the color gradient image corresponding to the second background image may be generated by a color gradient from the third color to the second color. The third color may include at least one of the first color and the target color, which is not limited herein. In an embodiment, the target color may be any preset color, such as white.

In an embodiment, after receiving the image change operation, the electronic device may first fill the second color in a canvas to generate a second color background image, in response to the image change operation; perform a color gradient processing on the second color background image based on the third color, to obtain the second background image; and then replace the first background image with the second background image for display.

In these embodiments, the electronic device may perform a color gradient processing to the second color background image based on a fixed color gradient center and a fixed gradient radius, according to the third color, to obtain the second background image.

The fixed color gradient center may be any display position, which is not limited herein. For example, the fixed color gradient center may be the center of the display screen of the electronic device.

Taking the fixed color gradient center being the center of the display screen of the electronic device as an example, the electronic device may fill the second color in the canvas having the same size as the display screen of the electronic device to generate the second color background image. The color gradient processing is performed on the second color background image in the fixed gradient radius based on the third color, with the center of the canvas being the color gradient center, to obtain the second background image having the fixed gradient radius with the center of the display screen as the color gradient center. Then the first background image is replaced with the second background image for display.

The specific method for generating the second background image in the embodiments is described hereinafter, taking the center of the display screen of the electronic device being the fixed color gradient center as an example.

Figure 15 illustrates a schematic diagram of a principle for generating a background image according to an embodiment of the present disclosure.

As shown in Figure 15, the electronic device may display a first background image 1501 in full screen. A two-dimensional code image 1502 may be displayed on the first background image 1501 in the overlapping manner. The two-dimensional code image 1502 may be located in the middle of the first background image 1501.

After receiving the image change operation, the electronic device may obtain a second color, and fill the second color into a canvas having the same size as the first background image to generate the second color background image. A color gradient processing is performed on the second color background image based on the third color, with the center of the first background image 1501 as the color gradient center and half of the diagonal length of the first background image 1502 as a gradient radius 1503, to obtain a second background image after the gradient processing. In the second background image, the second color gradually changes to the third color from the center to the surroundings.

In other embodiments, in the case that the second background image includes a color gradient image corresponding to the second color and the image change operation is used to trigger the electronic device to select the second color, the color gradient image corresponding to the second background image may be generated by a color gradient processing on the second color based on operation parameters of the image change operation.

In an embodiment, the operation parameters may include at least one of an operation position, an operation duration and an operation strength.

The operation position may be used to determine the color gradient center. The operation duration may be used to determine the color gradient radius and/or the chromatism of the second color. The operation strength may be used to determine the color gradient radius and/or the chromatism of the second color.

Further, the chromatism of the second color may refer to a chromatism between the actual tone and the initial tone of the second color. The actual tone of the second color refers to a tone at the gradient center point of the second background image, and the initial tone of the second color refers to a tone of the second color preset by the electronic device.

In some examples, in the case that the operation parameters include the operation position, the electronic device may determine a color gradient center based on the operation position; and then perform the color gradient processing on the second color background image based on the determined color gradient center and a fixed gradient radius according to the third color, to obtain the second background image. The operation position may be a touch center point on the display screen of the electronic device when the user inputs the image change operation.

In an embodiment, the electronic device may fill the second color in a canvas having a size N times of the display screen of the electronic device to generate the second color background image, where N is a positive integer, e.g., N is 4. A color gradient process is performed on the second color background image based on the third color according to a fixed gradient radius, with the center of the canvas as the color gradient center, to obtain a second color background image after the gradient processing. The operation position is coincident with the center of the canvas. A second background image with the same size as the display screen is intercepted in the second color background image, based on a relative position of the operation position in the display screen of the electronic device, such that the relative position of the color gradient center in the second background image is the same as the relative position of the operation position in the display screen. Then, the first background image is replaced with the second background image, having the fixed gradient radius with the operation position being the color gradient center, for display.

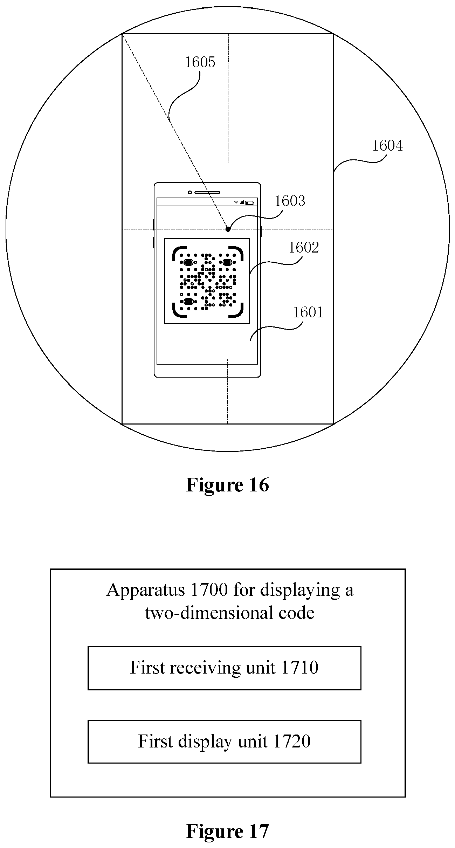

The specific method for generating the second background image in these examples is described below with reference to Figure 16.

Figure 16 illustrates a schematic diagram of a principle of generating a background image according to another embodiment of the present disclosure.

As shown in Figure 16, the electronic device may display a first background image 1601 in full screen. A two-dimensional code image 1602 may be displayed on the first background image 1601 in the overlapping manner. The two-dimensional code image 1602 may be located in the middle of the first background image 1601.

When the user clicks on a display position 1603 on the first background image 1601, the electronic device may obtain the second color and fill the second color into a canvas having a size four times the size of the first background image 1601 to generate a second color background image 1604. A color gradient processing is performed on the second color background image 1604 based on the third color, with the center of the second color background image 1604 as the color gradient center and half of the diagonal length of the second color background image 1604 as the gradient radius 1605, to obtain the second color background image 1604 after the gradient processing. In the second color background image 1604 after the gradient processing, the second color gradually changes from the center to the third color in all directions. Finally, the display position 1603 may coincide with the center of the second color background image 1604; and a second background image with the same dimensions as the first background image 1601 is intercepted from the second color background image 1604 after the gradient processing.

In other examples, in the case that the image change operation includes a long press operation, the operation parameters include the operation duration, and the operation duration is used to determine the color gradient radius, the electronic device may determine the color gradient radius corresponding to the operation duration based on a correspondence between the operation duration and the color gradient radius. Then, the color gradient processing is performed on the second color background image based on the determined color gradient radius according to the third color, to obtain the second background image, which is not repeated herein.

In further examples, in the case that the operation parameters include the operation strength and the operation strength is used to determine the chromatism of the second color, the second color background image is obtained by filling an initial tone of the second color. The electronic device may further determine the chromatism of the second color corresponding to the operation strength based on a correspondence between the operation strength and the chromatism. Then, based on the chromatism of the second color, the image color of the second color background image is adjusted from the initial tone of the second color to the actual tone of the second color. The color gradient processing is performed on the second color background image after adjusting the image color based on the third color, to obtain the second background image, which is not repeated herein.

In some other embodiments of the present disclosure, the second background image may be an image generated in advance based on the second color.

In an embodiment, before step S1340, the method for displaying the two-dimensional code may further include: querying a second background image corresponding to the second color.

Specifically, the electronic device may query the second background image corresponding to the second color from the pre-stored predetermined background images corresponding to the respective colors. The predetermined background image may be generated by using the method for generating in real-time the first background image described above, which will not be repeated herein.

In an embodiment, in the case that one color corresponds to multiple predetermined background images, the electronic device may randomly select one of the predetermined background images corresponding to the second color, and use the selected predetermined background image as the second background image.

Thus, in the embodiment of the disclosure, the personalized demands of the user can be further met, thereby improving the user experience.

An apparatus for displaying a two-dimensional code is further provided according to an embodiment of the present disclosure, which is illustrated below in conjunction with Figure 17.

In an embodiment of the present disclosure, the apparatus for displaying the two-dimensional code may be an electronic device. In some embodiments, the electronic device may be the electronic device 101 in the client shown in Figure 1. The electronic device may be a device having a communication function, such as, a mobile phone, a tablet computer, a desktop computer, a laptop computer, a vehicle-mounted terminal, a wearable device, an all-in-one machine, a smart home device; or a device simulated by a virtual machine or an emulator.

Figure 17 illustrates a schematic structural diagram of an apparatus for displaying a two-dimensional code according to an embodiment of the present disclosure.

As shown in Figure 17, the apparatus 1700 for displaying a two-dimensional code may include a first receiving unit 1710 and a first display unit 1720.

The first receiving unit 1710 may be configured to receive a two-dimensional code display operation, where the two-dimensional code display operation is used to trigger a display of a two-dimensional code image corresponding to target content, and the target content belongs to a first application.

The first display unit 1720 may be configured to display, the two-dimensional code image in response to the two-dimensional code display operation, where the two-dimensional code image includes a first primary positioning point, and a second primary positioning point overlapped with the first primary positioning point, the first primary positioning point is located above the second primary positioning point, the first primary positioning point has a predetermined color, and the second primary positioning point has a signature color of the first application.

In an embodiment of the present disclosure, the two-dimensional code image corresponding to the target content in the first application can be displayed in response to the two-dimensional code display operation. The two-dimensional image may include the first primary positioning point, and the second primary positioning point overlapped with the first primary positioning point. The first primary positioning point is located above the second primary positioning point and has a predetermined color, and the second primary positioning point has the signature color of the first application, such that the two-dimensional code has the signature color of the first application, thereby enabling the two-dimensional code to reflect the unique style of the first application through the signature color and improving the recognition of the two-dimensional code.

In some embodiments of the present disclosure, the two-dimensional code image may further include auxiliary positioning points, and the auxiliary positioning points may be uniformly arranged around the first primary positioning point and the second primary positioning point overlapped with each other.

In some embodiments of the present disclosure, the signature color may include a first type of color, and a color obtained by binarizing the first type of color may be the same as the predetermined color.

The auxiliary positioning points may include a first auxiliary positioning point and a second auxiliary positioning point. The first auxiliary positioning point may have the predetermined color. The second auxiliary positioning point may have the first type of color.

In some embodiments of the present disclosure, the two-dimensional code image may further include a data point array. The data point array may include a first data point and a second data point. The first data point may have the predetermined color. The second data point may have the signature color.

Correspondingly, the data point array may be generated based on the target content. The data point array may be used to enable a second application to acquire the target content. The second application may include at least one of the first application and other applications other than the first application.

In some embodiments of the present disclosure, the signature color may include a first type of color and a second type of color, a color obtained by binarizing the first type of color is the same as the predetermined color, and a color obtained by binarizing the second type of color may be different from the predetermined color.

Correspondingly, the second data point may include a first type of second data point and a second type of second data point. The first type of second data point may have the first type of color. The second type of second data point may have the second type of color. The first data point and the first type of second data points may be generated based on the target content.

In some embodiments of the present disclosure, the two-dimensional code image may further include an image border, and the image border is generated based on the signature color.

In some embodiments of the present disclosure, the first display unit 1720 may be further configured to display the two-dimensional code image on a first background image, where the first background image is generated based on a first color.

Correspondingly, the apparatus 1700 for displaying the two-dimensional code may further include a second receiving unit and a second display unit.

The second receiving unit may be configured to receive an image change operation, where the image change operation may be used to replace the first background image with a second background image.

The second display unit may be configured to replace the first background image with the second background image for display, in response to the image change operation.

In some embodiments of the present disclosure, the second display unit may be further configured to: expand the second background image in a predetermined radius increment, with an operation position of the image change operation as a center, until the first background image is replaced with the second background image.

In some embodiments of the present disclosure, the second background image may include a color gradient image corresponding to the second color.

In some embodiments of the present disclosure, the color gradient image may be generated by a color gradient from the second color to a third color, where the third color may include at least one of the first color and a target color.

In some embodiments of the present disclosure, the color gradient image may be generated by performing a color gradient on the second color based on operation parameters of the image change operation, where the operation parameters may include at least one of an operation position, an operation duration and an operation strength.

In some embodiments of the present disclosure, the apparatus 1700 for displaying the two-dimensional code may further include: a third display unit configured to display a target control, in response to the two-dimensional code display operation.

The target control may include at least one of a two-dimensional code storage control, a two-dimensional code scanning control and a two-dimensional code sharing control.

It should be noted that the apparatus 1700 for displaying the two-dimensional code shown in Figure 17 can perform the various steps in the method embodiment shown in Figure 2 to Figure 16 and achieve the various processes and effects in the method embodiment shown in Figure 2 to Figure 16, which are not repeated herein.

An electronic device is further provided according to an embodiment of the present disclosure. The electronic device may include a processor and a memory. The memory may be configured to store executable instructions. The processor may be configured to read the executable instructions from the memory, and execute the executable instructions to implement the method for displaying the two-dimensional code according to the foregoing embodiments.

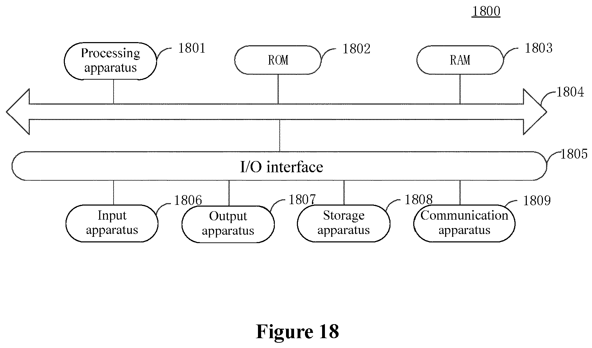

Figure 18 illustrates a schematic structural diagram of an electronic device according to an embodiment of the present disclosure. Referring specifically to Figure 18 hereinafter, a schematic structural diagram of an electronic device 1800 suitable for implementing an embodiment of the present disclosure is shown.

The electronic device 1800 in the embodiment of the present disclosure includes, but is not limited to, a mobile terminal such as a mobile phone, a notebook computer, a digital broadcast receiver, a PDA (personal digital assistant), a PAD (tablet computer), a PMP (portable multimedia player), a vehicle-mounted terminal (for example, a vehicle-mounted navigation terminal), a wearable device; and a stationary terminal such as a digital TV, a desktop computer, and a smart home device.

It should be noted that the electronic device 1800 shown in Figure 18 is only an example, and should not impose any limitations on the functions and scope of use of the embodiments of the present disclosure.

As shown in Figure 18, the electronic device 1800 may include a processing apparatus (such as a central processor and a graphic processor) 1801. The processing apparatus may perform various appropriate actions and processing based on programs stored in a read-only memory (ROM) 1802 or programs uploaded from a storage apparatus 1808 to a random access memory (RAM) 1803. Various programs and data required for operations of the electronic device 1800 are also stored in the RAM 1803. The processing apparatus 1801, the ROM 1802 and the RAM 1803 are connected to each other through the bus 1804. An input/output (I/O) interface 1805 is also connected to the bus 1804.

Generally, the following apparatuses may be connected to the I/O interface 1805: an input apparatus 1806 such as a touch screen, a touch panel, a keyboard, a mouse, a camera, a microphone, an accelerometer, and gyroscope; an output apparatus 1807 such as a liquid crystal display (LCD), a loudspeaker and a vibrator; a storage apparatus 1808 such as a magnetic tape and a hard disk; and a communication apparatus 1809. The communication apparatus 1809 may allow the electronic device 1800 to communicate with other device in a wired or wireless manner to exchange data. Although Figure 18 illustrates the electronic device 1800 provided with various apparatuses, it should be understood that not all shown apparatuses are required to be implemented or included. Alternatively, more or less apparatuses may be implemented or included.

A computer readable storage medium storing a computer program is further provided according to an embodiment of the present disclosure. The computer program, when executed by a processor, causes the processor to implement the method for displaying the two-dimensional code according to the foregoing embodiments.

Particularly, according to the embodiments of the present disclosure, the process described above in conjunction with flowcharts may be implemented as a computer software program. For example, a computer program product is further provided according to an embodiment of the present disclosure, including a computer program carried on a non-transitory computer readable medium. The computer program includes program code for performing the method shown in the flowchart. In the embodiment, the computer program may be downloaded and installed from the network via the communication apparatus 1809, or installed from the storage apparatus 1808, or installed from the ROM 1802. When the computer program is executed by the processing apparatus 1801, the functions defined in the method for displaying a two-dimensional code according to the embodiment of the present disclosure are performed.

It should be noted that, the computer readable medium described in the present disclosure may be a computer readable signal medium, a computer readable storage medium or any combination thereof. The computer readable storage medium may include but not limited to a system, an apparatus or a device in an electric, magnetic, optical, electromagnetic, infrared or a semiconductor form, or any combination thereof. The computer readable storage medium may include but not limited to electric connection of one or more wires, a portable computer magnetic disk, a hard disk, a random access memory (RAM), a read-only memory (ROM), an erasable programmable read only memory (EPROM or a flash memory), an optical fiber, a portable compact disk read only memory (CD-ROM), an optical storage device, a magnetic storage device or any appropriate combination thereof. In the present disclosure, the computer readable storage medium may be a tangible medium including or storing programs. The programs may be used by an instruction execution system, apparatus or device, or may be used in combination with the instruction execution system, apparatus or device. In the present disclosure, a computer readable signal medium may include a data signal in a baseband or propagated as a part of carrier. The computer readable signal medium carries computer readable program codes. The propagated data signal may be in a variety of forms, and include but not limited to an electromagnetic signal, an optical signal or any appropriate combination thereof. The computer readable signal medium may further be any computer readable medium other than the computer readable storage medium. The computer readable signal medium may send, propagate or transmit programs used by the instruction execution system, apparatus or device or the programs used in combination with the instruction execution system, apparatus or device. The program code embodied in the computer readable medium may be transmitted via any appropriate medium, including but not limited to an electric wire, an optical fiber, radio frequency (RF) or any appropriate combination thereof.

In some embodiments, the client and the server may perform communication by using any currently known network protocol such as Hyper Text Transfer Protocol (HTTP) or any network protocol to be developed in the further, and may connect with digital data communication (for example, a communication network) in any form or carried in any medium. Examples of the communication network include a local area network (LAN), a wide area network (WAN), Internet, and an end-to-end network (such as, ad hoc end-to-end network), and any currently known or future developed network.

The computer readable storage medium may be included in the electronic device, or may stand alone without being assembled into the electronic device.

The computer readable medium carries one or more programs. The one or more programs, when executed by the electronic device, enable the electronic device to perform the following operations:
receiving a two-dimensional code display operation, where the two-dimensional code display operation is used to trigger a display of a two-dimensional code image corresponding to target content, and the target content belongs to a first application; and displaying the two-dimensional code image in response to the two-dimensional code display operation, where the two-dimensional code image includes a first primary positioning point, and a second primary positioning point overlapped with the first primary positioning point, the first primary positioning point is located above the second primary positioning point, the first primary positioning point has a predetermined color, and the second primary positioning point has a signature color of the first application.

In an embodiment of the present disclosure, computer program codes for performing operations of the present disclosure may be written by using one or more program design language or any combination. The program design language includes but not limited to object oriented program design language such as Java, Smalltalk and C++, and further includes conventional process-type program design language such as "C" or similar program design language. The program codes may be completely or partially executed on a user computer, performed as an independent software packet, partially executed on the user computer and partially executed on a remote computer, or completely executed on the remote computer or a server. In a case of involving the remote computer, the remote computer may connect to the user computer via any type of network such as a local area network (LAN) and a wide area network (WAN). Alternatively, the remote computer may connect to an external computer (such as achieving internet connection by services provided by the internet network service provider).

The flowcharts and block diagrams in the drawings illustrate architecture, function and operation which may be implemented by the system, method and computer program product according to the embodiments of the present disclosure. Each block in the flowcharts or the block diagram may represent a module, a program segment or part of codes including executable instruction(s) for implementing specified logic functions. It should be noted that, in some alternative implementations, the functions marked in blocks may be performed in an order different from the order shown in the drawings. For example, two blocks shown in succession may actually be executed in parallel, or sometimes may be executed in a reverse order, which depends on the functions involved. It should also be noted that each block in the block diagram and/or flow chart and a combination of the blocks in the block diagram and/or flow chart may be implemented by a dedicated hardware-based system that performs specified functions or operations, or may be realized by a combination of dedicated hardware and computer instructions.

The units mentioned in the description of the embodiments of the present disclosure may be implemented by means of software or otherwise by means of hardware. A name of the units does not constitute a limitation to the units in some case.

The functions described above herein may be at least partially performed by one or more hardware logic components. For example, the hardware logic components may include but not limited to: a field programmable gate array (FPGA), an application specific integrated circuit (ASIC), an application specific standard product (ASSP), a system on chip (SOC), a complex programmable logic device (CPLD) and so on.

It the context of the present disclosure, the machine readable medium may be a tangible medium including or storing programs. The programs may be used by an instruction execution system, apparatus or device, or may be used in combination with the instruction execution system, apparatus or device. The machine readable medium may be a machine readable signal medium or a machine readable storage medium. The machine readable medium may include but not limited to a system, an apparatus or a device in an electric, magnetic, optical, electromagnetic, infrared or a semiconductor form, or any appropriate combination thereof. The machine readable storage medium may include but not limited to electric connection of one or more wires, a portable computer magnetic disk, a hard disk, a random access memory (RAM), a read-only memory (ROM), an erasable programmable read only memory (EPROM or a flash memory), an optical fiber, a portable compact disk read only memory (CD-ROM), an optical storage device, a magnetic storage device or any appropriate combination thereof.

The preferred embodiments and the technical principles of the present disclosure are described above. It should be understood by those skilled in the art that, the protection scope of the present disclosure is not limited to the technical solutions formed by specific combination of the above technical features, and other technical solutions formed by random combinations of the above technical features or equivalent features without departing from the concept of the present disclosure also fall within the protection scope of the present disclosure, for example the technical solution formed by replacement between the above technical features and technical features with similar functions disclosed (not limited) in the present disclosure.

Although the operations are described in a specific order, the operations are unnecessarily to be performed in the specific order or in a chronological order. In a certain environment, a multi-task and parallel processing may be beneficial. Although specific details are described above, the details should not be understood as restriction to the scope of the present disclosure. Some features described in the context of different embodiments may be combined in one embodiment. Alternatively, the features described in the context of one embodiment may be implemented in multiple embodiments independently or in any appropriate sub-combination.

The subject matter is described by language specific to the structure feature and/or method logic, it should be understood that the subject matter defined in the appended claims is not limited to the specific features or actions described above. Conversely, the specific features and actions described above are merely example forms of implementing the claims.

## Claims

1. A method for displaying a two-dimensional code, comprising:
receiving (S210) a two-dimensional code display operation, wherein the two-dimensional code display operation is used to trigger a display of a two-dimensional code image corresponding to target content, and the target content belongs to a first application; and
displaying (S220) the two-dimensional code image in response to the two-dimensional code display operation, wherein the two-dimensional code image comprises a first primary positioning point, and a second primary positioning point overlapped with the first primary positioning point; the first primary positioning point is located above the second primary positioning point; the first primary positioning point has a predetermined color; and the second primary positioning point has a signature color of the first application,
wherein the signature color comprises a first type of color, and a color obtained by binarizing the first type of color is the same as the predetermined color.

2. The method according to claim 1, wherein the two-dimensional code image further comprises auxiliary positioning points, and the auxiliary positioning points are uniformly arranged around the first primary positioning point and the second primary positioning point overlapped with each other.

3. The method according to claim 2, wherein the auxiliary positioning points comprise a first auxiliary positioning point and a second auxiliary positioning point, the first auxiliary positioning point has the predetermined color, and the second auxiliary positioning point has the first type of color.

4. The method according to claim 1, wherein the two-dimensional code image further comprises a data point array, the data point array comprises a first data point and a second data point, the first data point has the predetermined color, and the second data point has the signature color, and
wherein the data point array is generated based on the target content, and the data point array is used to enable a second application to acquire the target content, wherein the second application comprises at least one of the first application and other applications other than the first application.

5. The method according to claim 4, wherein the signature color comprises a first type of color and a second type of color, a color obtained by binarizing the first type of color is the same as the predetermined color, and a color obtained by binarizing the second type of color is different from the predetermined color, and
wherein the second data point comprise a first type of second data point and a second type of second data point, the first type of second data point have the first type of color, the second type of second data points have the second type of color, and the first data point and the first type of second data point are generated based on the target content.

6. The method according to any one of claims 1 to 5, wherein the signature color of the first application comprises a color contained in a signature icon of the first application, and
wherein the signature icon comprises a logotype of the first application.

7. The method according to claim 1, wherein the two-dimensional code image further comprises an image border, and the image border is generated based on the signature color.

8. The method according to claim 7, wherein the image border is a closed border comprising sub-borders with the signature color, or the image border is an open border comprising sub-borders with the signature color.

9. The method according to claim 8, wherein in the case that the signature color comprises a first type of color and a second type of color, the image border is the closed border comprising a first sub-border with the first type of color and a second sub-border with the second type of color.

10. The method according to claim 7, wherein the image border is a closed border comprising sub-borders with the signature color and the predetermined color, or the image border is an open border comprising sub-borders with the signature color and the predetermined color.

11. The method according to claim 1, wherein the displaying the two-dimensional code image comprises:
displaying the two-dimensional code image on a first background image, wherein the first background image is generated based on a first color.

12. The method according to claim 11, wherein the first background image comprises a color gradient image corresponding to the first color.

13. The method according to claim 11 or 12, wherein after displaying the two-dimensional code image, the method further comprises:
receiving (S1330) an image change operation, wherein the image change operation is used to replace the first background image with a second background image, and the second background image is generated based on a second color; and
replacing (S1340) the first background image with the second background image for display, in response to the image change operation.

14. The method according to claim 13, wherein the replacing the first background image with the second background image for display comprises:
expanding the second background image in a predetermined radius increment, with an operation position of the image change operation as a center, until the first background image is replaced with the second background image.

15. The method according to claim 13, wherein the second background image comprises a color gradient image corresponding to the second color.

16. The method according to claim 15, wherein the color gradient image is generated by:
performing a color gradient on the second color based on a third color, wherein the third color comprises at least one of the first color and a target color; and/or
performing a color gradient on the second color based on an operation parameter of the image change operation, wherein the operation parameter comprises at least one of an operation position, an operation duration and an operation strength.

17. The method according to claim 1, wherein after receiving a two-dimensional code display operation, the method further comprises:
displaying a target control, in response to the two-dimensional code display operation,
wherein the target control comprises at least one of a two-dimensional code storage control, a two-dimensional code scanning control and a two-dimensional code sharing control.

18. The method according to claim 1, wherein the target content is to-be-shared information in the first application, or the target content is a fetch address of a page for displaying to-be-shared information in the first application.

19. The method according to claim 1, wherein the two-dimensional code image comprises a plurality of sets of the first primary positioning point and the second primary positioning point overlapped with each other, and each of the plurality of sets of the first primary positioning point and the second primary positioning point overlapped with each other is arranged at a predetermined point of the two-dimensional code image, and
wherein each of the plurality of sets comprises a plurality of overlapped first primary positioning points; and/or each of the plurality of sets comprises a plurality of overlapped second primary positioning points.

20. The method according to claim 19, wherein in a case that each of the plurality of sets comprises the plurality of overlapped first primary positioning points, the second primary positioning point overlapped with the first primary positioning point in the set is overlapped with an arbitrary part of at least one of the plurality of first primary positioning points; or
in a case that each of the plurality of sets comprises the plurality of overlapped second primary positioning points, the plurality of overlapped second primary positioning points in the set are overlapped with different parts of at least one of the plurality of first primary positioning points in the set, respectively.

21. The method according to claim 19, wherein in each of the plurality of sets, centers of the plurality of overlapped first primary positioning points are in line with centers of the plurality of second primary positioning points, and the centers of the plurality of second primary positioning points are located on two sides of the centers of the plurality of first primary positioning points.

22. The method according to claim 1, further comprising:
sending a two-dimensional code acquisition request carrying the target content to a server of the first application, in response to the two-dimensional code display operation for triggering the display of the two-dimensional code image not stored locally on an electronic device, wherein the two-dimensional code acquisition request is used to instruct the server to provide a two-dimensional code image corresponding to the target content; and receiving the two-dimensional code image from the server, or
generating a two-dimensional code image corresponding to the target content, in response to the two-dimensional code display operation for triggering the display of the two-dimensional code image not stored locally in an electronic device

23. The method according to claim 2, wherein the two-dimensional code image comprises a plurality of sets of auxiliary positioning points, and one of the plurality of sets of auxiliary positioning points is uniformly arranged around one set of the first primary positioning point and the second primary positioning point overlapped with each other, and
wherein the centers of the plurality of sets of auxiliary positioning points form a rectangle.

24. An electronic device, comprising:
a processor (1801);
a display; and
a memory (1808) configured to store executable instructions;
wherein the processor (1801) is configured to read the executable instructions from the memory (1808), and execute the executable instructions to implement the method for displaying the two-dimensional code according to any one of the claims 1 to 23 to display the two-dimensional code image on the display.

25. A computer-readable storage medium having a computer program stored thereon, wherein the computer program, when executed by the processor (1801) of the electronic device according to claim 24, causes the processor (1801) to implement the method for displaying the two-dimensional code according to any one of the claims 1 to 23.

## Patentansprüche

1. Verfahren zum Anzeigen eines zweidimensionalen Codes, umfassend:
Empfangen (S210) einer zweidimensionalen Codeanzeigeoperation, wobei die zweidimensionale Codeanzeigeoperation verwendet wird, um eine Anzeige eines zweidimensionalen Codebilds auszulösen, das Zielinhalt entspricht, und der Zielinhalt zu einer ersten Anwendung gehört; und
Anzeigen (S220) des zweidimensionalen Codebilds als Reaktion auf die zweidimensionale Codeanzeigeoperation, wobei das zweidimensionale Codebild einen ersten primären Positionierungspunkt und einen zweiten primären Positionierungspunkt umfasst, der von dem ersten primären Positionierungspunkt überlagert wird; der erste primäre Positionierungspunkt sich über dem zweiten primären Positionierungspunkt befindet; der erste primäre Positionierungspunkt eine vorgegebene Farbe aufweist; und der zweite primäre Positionierungspunkt eine Signaturfarbe der ersten Anwendung aufweist,
wobei die Signaturfarbe einen ersten Farbtyp umfasst und eine durch Binärisieren des ersten Farbtyps erhaltene Farbe dieselbe wie die vorgegebene Farbe ist.

2. Verfahren nach Anspruch 1, wobei das zweidimensionale Codebild weiter Hilfspositionierungspunkte umfasst und die Hilfspositionierungspunkte gleichmäßig um den ersten primären Positionierungspunkt und den zweiten primären Positionierungspunkt herum angeordnet sind, die einander überlagern.

3. Verfahren nach Anspruch 2, wobei die Hilfspositionierungspunkte einen ersten Hilfspositionierungspunkt und einen zweiten Hilfspositionierungspunkt umfassen, wobei der erste Hilfspositionierungspunkt die vorgegebene Farbe aufweist und der zweite Hilfspositionierungspunkt den ersten Farbtyp aufweist.

4. Verfahren nach Anspruch 1, wobei das zweidimensionale Codebild weiter ein Datenpunktarray umfasst, wobei das Datenpunktarray einen ersten Datenpunkt und einen zweiten Datenpunkt umfasst, wobei der erste Datenpunkt die vorgegebene Farbe aufweist und der zweite Datenpunkt die Signaturfarbe aufweist, und
wobei das Datenpunktarray basierend auf dem Zielinhalt erzeugt wird und das Datenpunktarray verwendet wird, um einer zweiten Anwendung zu ermöglichen, den Zielinhalts abzurufen, wobei die zweite Anwendung mindestens eine der ersten Anwendung und anderer Anwendungen als die erste Anwendung umfasst.

5. Verfahren nach Anspruch 4, wobei die Signaturfarbe einen ersten Farbtyp und einen zweiten Farbtyp umfasst, eine durch Binärisieren des ersten Farbtyps erhaltene Farbe dieselbe wie die vorgegebene Farbe ist und eine durch Binärisieren des zweiten Farbtyps erhaltene Farbe sich von der vorgegebenen Farbe unterscheidet, und
wobei die zweiten Datenpunkte einen ersten Typ zweiter Datenpunkte und einen zweiten Typ zweiter Datenpunkte umfassen, der erste Typ zweiter Datenpunkte den ersten Farbtyp aufweist, der zweite Typ zweiter Datenpunkte den zweiten Farbtyp aufweist und der erste Datenpunkt und der erste Typ zweiter Datenpunkte basierend auf dem Zielinhalt erzeugt werden.

6. Verfahren nach einem der Ansprüche 1 bis 5, wobei die Signaturfarbe der ersten Anwendung eine Farbe umfasst, die in einem Signatursymbol der ersten Anwendung enthalten ist, und
wobei das Signatursymbol ein Firmenzeichen der ersten Anwendung umfasst.

7. Verfahren nach Anspruch 1, wobei das zweidimensionale Codebild weiter einen Bildrand umfasst und der Bildrand basierend auf der Signaturfarbe erzeugt wird.

8. Verfahren nach Anspruch 7, wobei der Bildrand ein geschlossener Rand ist, der Unterränder mit der Signaturfarbe umfasst, oder wobei der Bildrand ein offener Rand ist, der Unterränder mit der Signaturfarbe umfasst.

9. Verfahren nach Anspruch 8, wobei in dem Fall, dass die Signaturfarbe einen ersten Farbtyp und einen zweiten Farbtyp umfasst, der Bildrand der geschlossene Rand ist, der einen ersten Unterrand mit dem ersten Farbtyp und einen zweiten Unterrand mit dem zweiten Farbtyp umfasst.

10. Verfahren nach Anspruch 7, wobei der Bildrand ein geschlossener Rand ist, der Unterränder mit der Signaturfarbe und der vorgegebenen Farbe umfasst, oder wobei der Bildrand ein offener Rand ist, der Unterränder mit der Signaturfarbe und der vorgegebenen Farbe umfasst.

11. Verfahren nach Anspruch 1, wobei das Anzeigen des zweidimensionalen Codebilds umfasst:
Anzeigen des zweidimensionalen Codebilds auf einem ersten Hintergrundbild, wobei das erste Hintergrundbild basierend auf einer ersten Farbe erzeugt wird.

12. Verfahren nach Anspruch 11, wobei das erste Hintergrundbild ein Farbverlaufsbild umfasst, das der ersten Farbe entspricht.

13. Verfahren nach Anspruch 11 oder 12, wobei das Verfahren nach Anzeigen des zweidimensionalen Codebilds weiter Folgendes umfasst:
Empfangen (S1330) einer Bildänderungsoperation, wobei die Bildänderungsoperation verwendet wird, um das erste Hintergrundbild durch ein zweites Hintergrundbild zu ersetzen, und das zweite Hintergrundbild basierend auf einer zweiten Farbe erzeugt wird; und
Ersetzen (S1340) des ersten Hintergrundbilds durch das zweite Hintergrundbild zur Anzeige, als Reaktion auf die Bildänderungsoperation.

14. Verfahren nach Anspruch 13, wobei das Ersetzen des ersten Hintergrundbilds durch das zweite Hintergrundbild zur Anzeige Folgendes umfasst:
Erweitern des zweiten Hintergrundbilds in einem vorgegebenen Radiusinkrement mit einer Operationsposition der Bildänderungsoperation als einen Mittelpunkt, bis das erste Hintergrundbild durch das zweite Hintergrundbild ersetzt ist.

15. Verfahren nach Anspruch 13, wobei das zweite Hintergrundbild ein Farbverlaufsbild umfasst, das der zweiten Farbe entspricht.

16. Verfahren nach Anspruch 15, wobei das Farbverlaufsbild durch Folgendes erzeugt wird:
Durchführen eines Farbverlaufs an der zweiten Farbe basierend auf einer dritten Farbe, wobei die dritte Farbe mindestens eine der ersten Farbe und einer Zielfarbe umfasst; und/oder
Durchführen eines Farbverlaufs an der zweiten Farbe basierend auf einem Operationsparameter der Bildänderungsoperation, wobei der Operationsparameter mindestens eines einer Operationsposition, einer Operationsdauer und einer Operationsstärke umfasst.

17. Verfahren nach Anspruch 1, wobei das Verfahren nach Empfangen einer zweidimensionalen Codeanzeigeoperation weiter Folgendes umfasst:
Anzeigen einer Zielsteuerung als Reaktion auf die zweidimensionale Codeanzeigeoperation,
wobei die Zielsteuerung mindestens eine einer zweidimensionalen Codespeichersteuerung, einer zweidimensionalen Codeabtaststeuerung und einer zweidimensionalen Codeteilungssteuerung umfasst.

18. Verfahren nach Anspruch 1, wobei der Zielinhalt zu teilende Informationen in der ersten Anwendung sind oder der Zielinhalt eine Abrufadresse einer Seite zum Anzeigen zu teilender Informationen in der ersten Anwendung ist.

19. Verfahren nach Anspruch 1, wobei das zweidimensionale Codebild eine Vielzahl von Sätzen des ersten primären Positionierungspunkts und des zweiten primären Positionierungspunkts umfasst, die einander überlagern, und jeder der Vielzahl von Sätzen des ersten primären Positionierungspunkts und des zweiten primären Positionierungspunkts, die einander überlagern, an einem vorgegebenen Punkt des zweidimensionalen Codebilds angeordnet ist, und
wobei jeder der Vielzahl von Sätzen eine Vielzahl von überlagerten ersten primären Positionierungspunkten umfasst; und/oder jeder der Vielzahl von Sätzen eine Vielzahl von überlagerten zweiten primären Positionierungspunkten umfasst.

20. Verfahren nach Anspruch 19, wobei in einem Fall, in dem jeder der Vielzahl von Sätzen die Vielzahl von überlagerten ersten primären Positionierungspunkten umfasst, der zweite primäre Positionierungspunkt, der von dem ersten primären Positionierungspunkt in dem Satz überlagert wird, von einem beliebigen Teil von mindestens einem der Vielzahl von ersten primären Positionierungspunkten überlagert wird; oder
in einem Fall, in dem jeder der Vielzahl von Sätzen die Vielzahl von überlagerten zweiten primären Positionierungspunkten umfasst, die Vielzahl von überlagerten zweiten primären Positionierungspunkten in dem Satz von unterschiedlichen Teilen von mindestens einem der Vielzahl von ersten primären Positionierungspunkten in dem Satz jeweils überlagert werden.

21. Verfahren nach Anspruch 19, wobei in jedem der Vielzahl von Sätzen Mittelpunkte der Vielzahl von überlagerten ersten primären Positionierungspunkten auf einer Linie mit Mittelpunkten der Vielzahl von zweiten primären Positionierungspunkten liegen und die Mittelpunkte der Vielzahl von zweiten primären Positionierungspunkten auf zwei Seiten der Mittelpunkte der Vielzahl von ersten primären Positionierungspunkten liegen.

22. Verfahren nach Anspruch 1, weiter umfassend:
Senden einer zweidimensionalen Codebeschaffungsanforderung mit dem Zielinhalt an einen Server der ersten Anwendung, als Reaktion auf zweidimensionale Codeanzeigeoperation, um die Anzeige des zweidimensionalen Codebilds, das nicht lokal auf einer elektronischen Vorrichtung gespeichert ist, auszulösen, wobei die zweidimensionale Codebeschaffungsanforderung verwendet wird, um den Server anzuweisen, ein dem Zielinhalt entsprechendes zweidimensionales Codebild bereitzustellen; und Empfangen des zweidimensionalen Codebilds von dem Server, oder
Erzeugen eines zweidimensionalen Codebilds, das dem Zielinhalt entspricht, als Reaktion auf die zweidimensionale Codeanzeigeoperation, um die Anzeige des zweidimensionalen Codebilds, das nicht lokal auf einer elektronischen Vorrichtung gespeichert ist, auszulösen.

23. Verfahren nach Anspruch 2, wobei das zweidimensionale Codebild eine Vielzahl von Sätzen von Hilfspositionierungspunkten umfasst und einer der Vielzahl von Sätzen von Hilfspositionierungspunkten gleichmäßig um einen Satz des ersten primären Positionierungspunkts und des zweiten primären Positionierungspunkts herum angeordnet ist, die einander überlagern, und
wobei die Mittelpunkte der Vielzahl von Sätzen von Hilfspositionierungspunkten ein Rechteck bilden.

24. Elektronische Vorrichtung, umfassend:
einen Prozessor (1801);
eine Anzeige; und
einen Speicher (1808), der dazu konfiguriert ist, ausführbare Anweisungen zu speichern;
wobei der Prozessor (1801) dazu konfiguriert ist, die ausführbaren Anweisungen aus dem Speicher (1808) zu lesen und die ausführbaren Anweisungen auszuführen, um das Verfahren zum Anzeigen des zweidimensionalen Codes nach einem der Ansprüche 1 bis 23 zu implementieren, um das zweidimensionale Codebild auf der Anzeige anzuzeigen.

25. Computerlesbares Speichermedium, das ein Computerprogramm darauf gespeichert aufweist, wobei das Computerprogramm, wenn es von dem Prozessor (1801) der elektronischen Vorrichtung nach Anspruch 24 ausgeführt wird, den Prozessor (1801) veranlasst, das Verfahren zum Anzeigen des zweidimensionalen Codes nach einem der Ansprüche 1 bis 23 zu implementieren.

## Revendications

1. Procédé d'affichage d'un code bidimensionnel, comprenant :
la réception (S210) d'une opération d'affichage de code bidimensionnel, dans lequel l'opération d'affichage de code bidimensionnel est utilisée pour déclencher un affichage d'une image de code bidimensionnel correspondant à un contenu cible, et le contenu cible appartient à une première application ; et
l'affichage (S220) de l'image de code bidimensionnel en réponse à l'opération d'affichage de code bidimensionnel, dans lequel l'image de code bidimensionnel comprend un premier point de positionnement principal et un second point de positionnement principal chevauché par le premier point de positionnement principal ; le premier point de positionnement principal est situé au-dessus du second point de positionnement principal ; le premier point de positionnement principal présente une couleur prédéterminée ; et le second point de positionnement principal présente une couleur de signature de la première application,
dans lequel la couleur de signature comprend un premier type de couleur, et une couleur obtenue en binarisant le premier type de couleur est la même que la couleur prédéterminée.

2. Procédé selon la revendication 1, dans lequel l'image de code bidimensionnel comprend en outre des points de positionnement auxiliaires, et les points de positionnement auxiliaires sont agencés uniformément autour du premier point de positionnement principal et du second point de positionnement principal qui se chevauchent.

3. Procédé selon la revendication 2, dans lequel les points de positionnement auxiliaires comprennent un premier point de positionnement auxiliaire et un second point de positionnement auxiliaire, le premier point de positionnement auxiliaire présente la couleur prédéterminée, et le second point de positionnement auxiliaire présente le premier type de couleur.

4. Procédé selon la revendication 1, dans lequel l'image de code bidimensionnel comprend en outre un réseau de points de données, le réseau de points de données comprend un premier point de données et un second point de données, le premier point de données présente la couleur prédéterminée, et le second point de données présente la couleur de signature, et
dans lequel le réseau de points de données est généré sur la base du contenu cible, et le réseau de points de données est utilisé pour permettre à une seconde application d'acquérir le contenu cible, dans lequel la seconde application comprend au moins l'une de la première application et d'applications autres que la première application.

5. Procédé selon la revendication 4, dans lequel la couleur de signature comprend un premier type de couleur et un second type de couleur, une couleur obtenue par binarisation du premier type de couleur est la même que la couleur prédéterminée, et une couleur obtenue par binarisation du second type de couleur est différente de la couleur prédéterminée, et
dans lequel le second point de données comprend un premier type de second point de données et un second type de second point de données, le premier type de second point de données présente le premier type de couleur, le second type de second point de données présente le second type de couleur, et le premier point de données et le premier type de second point de données sont générés sur la base du contenu cible.

6. Procédé selon l'une quelconque des revendications 1 à 5, dans lequel la couleur de signature de la première application comprend une couleur contenue dans une icône de signature de la première application, et
dans lequel l'icône de signature comprend un logotype de la première application.

7. Procédé selon la revendication 1, dans lequel l'image de code bidimensionnel comprend en outre une bordure d'image, et la bordure d'image est générée sur la base de la couleur de signature.

8. Procédé selon la revendication 7, dans lequel la bordure d'image est une bordure fermée comprenant des sous-bordures avec la couleur de signature, ou la bordure d'image est une bordure ouverte comprenant des sous-bordures avec la couleur de signature.

9. Procédé selon la revendication 8, dans lequel, dans le cas où la couleur de signature comprend un premier type de couleur et un second type de couleur, la bordure d'image est la bordure fermée comprenant une première sous-bordure avec le premier type de couleur et une seconde sous-bordure avec le second type de couleur.

10. Procédé selon la revendication 7, dans lequel la bordure d'image est une bordure fermée comprenant des sous-bordures avec la couleur de signature et la couleur prédéterminée, ou la bordure d'image est une bordure ouverte comprenant des sous-bordures avec la couleur de signature et la couleur prédéterminée.

11. Procédé selon la revendication 1, dans lequel l'affichage de l'image de code bidimensionnel comprend :
l'affichage de l'image de code bidimensionnel sur une première image d'arrière-plan, dans lequel la première image d'arrière-plan est générée sur la base d'une première couleur.

12. Procédé selon la revendication 11, dans lequel la première image d'arrière-plan comprend une image de dégradé de couleurs correspondant à la première couleur.

13. Procédé selon la revendication 11 ou 12, dans lequel, après l'affichage de l'image de code bidimensionnel, le procédé comprend en outre :
la réception (S1330) d'une opération de changement d'image, dans lequel l'opération de changement d'image est utilisée pour remplacer la première image d'arrière-plan par une seconde image d'arrière-plan, et la seconde image d'arrière-plan est générée sur la base d'une deuxième couleur ; et
le remplacement (S1340) de la première image d'arrière-plan par la seconde image d'arrière-plan pour l'affichage, en réponse à l'opération de changement d'image.

14. Procédé selon la revendication 13, dans lequel le remplacement de la première image d'arrière-plan par la seconde image d'arrière-plan pour l'affichage comprend :
l'agrandissement de la seconde image d'arrière-plan dans un incrément de rayon prédéterminé, avec une position d'opération de l'opération de changement d'image comme centre, jusqu'à ce que la première image d'arrière-plan soit remplacée par la seconde image d'arrière-plan.

15. Procédé selon la revendication 13, dans lequel la seconde image d'arrière-plan comprend une image de dégradé de couleurs correspondant à la deuxième couleur.

16. Procédé selon la revendication 15, dans lequel l'image de dégradé de couleurs est générée par :
la réalisation d'un dégradé de couleurs sur la deuxième couleur sur la base d'une troisième couleur, dans lequel la troisième couleur comprend au moins l'une de la première couleur et d'une couleur cible ; et/ou
la réalisation d'un dégradé de couleurs sur la deuxième couleur sur la base d'un paramètre d'opération de l'opération de changement d'image, dans lequel le paramètre d'opération comprend au moins l'une d'une position d'opération, d'une durée d'opération et d'une force d'opération.

17. Procédé selon la revendication 1, dans lequel, après la réception d'une opération d'affichage de code bidimensionnel, le procédé comprend en outre :
l'affichage d'une commande cible, en réponse à l'opération d'affichage de code bidimensionnel,
dans lequel la commande cible comprend au moins l'une parmi une commande de stockage de code bidimensionnel, une commande de balayage de code bidimensionnel et une commande de partage de code bidimensionnel.

18. Procédé selon la revendication 1, dans lequel le contenu cible est une information à partager dans la première application, ou le contenu cible est une adresse de récupération d'une page pour afficher des informations à partager dans la première application.

19. Procédé selon la revendication 1, dans lequel l'image de code bidimensionnel comprend une pluralité d'ensembles du premier point de positionnement principal et du second point de positionnement principal se chevauchant, et chacun de la pluralité d'ensembles du premier point de positionnement principal et du second point de positionnement principal se chevauchant est agencé à un point prédéterminé de l'image de code bidimensionnel, et
dans lequel chacun de la pluralité d'ensembles comprend une pluralité de premiers points de positionnement principaux se chevauchant ; et/ou chacun de la pluralité d'ensembles comprend une pluralité de seconds points de positionnement principaux se chevauchant.

20. Procédé selon la revendication 19, dans lequel, dans le cas où chacun de la pluralité d'ensembles comprend la pluralité de premiers points de positionnement principaux se chevauchant, le second point de positionnement principal chevauché par le premier point de positionnement principal de l'ensemble est chevauché par une partie arbitraire d'au moins un de la pluralité de premiers points de positionnement principaux ; ou
dans le cas où chacun de la pluralité d'ensembles comprend la pluralité de seconds points de positionnement principaux se chevauchant, la pluralité de seconds points de positionnement principaux se chevauchant dans l'ensemble sont chevauchés respectivement par différentes parties d'au moins un de la pluralité de premiers points de positionnement principaux dans l'ensemble.

21. Procédé selon la revendication 19, dans lequel, dans chacun de la pluralité d'ensembles, des centres de la pluralité de premiers points de positionnement principaux se chevauchant sont alignés sur les centres de la pluralité de seconds points de positionnement principaux, et les centres de la pluralité de seconds points de positionnement principaux sont situés de part et d'autre des centres de la pluralité de premiers points de positionnement principaux.

22. Procédé selon la revendication 1, comprenant en outre :
l'envoi d'une demande d'acquisition de code bidimensionnel contenant le contenu cible à un serveur de la première application, en réponse à l'opération d'affichage de code bidimensionnel pour déclencher l'affichage de l'image de code bidimensionnel non stockée localement sur un dispositif électronique, dans lequel la demande d'acquisition de code bidimensionnel est utilisée pour demander au serveur de fournir une image de code bidimensionnel correspondant au contenu cible ; et la réception de l'image de code bidimensionnel depuis le serveur, ou
la génération d'une image de code bidimensionnel correspondant au contenu cible, en réponse à l'opération d'affichage de code bidimensionnel pour déclencher l'affichage de l'image de code bidimensionnel non stockée localement dans un dispositif électronique.

23. Procédé selon la revendication 2, dans lequel l'image de code bidimensionnel comprend une pluralité d'ensembles de points de positionnement auxiliaires, et l'un de la pluralité d'ensembles de points de positionnement auxiliaires est agencé uniformément autour d'un ensemble du premier point de positionnement principal et du second point de positionnement principal qui se chevauchent, et
dans lequel les centres de la pluralité d'ensembles de points de positionnement auxiliaires forment un rectangle.

24. Dispositif électronique, comprenant :
un processeur (1801) ;
un dispositif d'affichage ; et
une mémoire (1808) configurée pour stocker des instructions exécutables ;
dans lequel le processeur (1801) est configuré pour lire les instructions exécutables à partir de la mémoire (1808), et exécuter les instructions exécutables pour mettre en œuvre le procédé d'affichage du code bidimensionnel selon l'une quelconque des revendications 1 à 23 pour afficher l'image de code bidimensionnel sur le dispositif d'affichage.

25. Support de stockage lisible par ordinateur stockant un programme informatique sur celui-ci, dans lequel le programme informatique, lorsqu'il est exécuté par le processeur (1801) du dispositif électronique selon la revendication 24, amène le processeur (1801) à mettre en œuvre le procédé d'affichage du code bidimensionnel selon l'une quelconque des revendications 1 à 23.
